# EUROPÄISCHE PATENTANMELDUNG

(11) **EP 4 113 671 A2**
(43) Veröffentlichungstag der Anmeldung: **04.01.2023**
(21) Anmeldenummer: 22181114.4
(22) Anmeldetag: 24.06.2022
(51) Int. Cl.: H01M 4/88, H01M 8/1004

(54) **VERFAHREN UND VORRICHTUNG ZUR HERSTELLUNG EINER MEMBRAN-ELEKTRODEN-ANORDNUNG**

(30) Priorität: 02.07.2021 DE 102021117069
(71) Anmelder: MÜHLBAUER GMBH & CO. KG, 93426 Roding (DE)
(72) Erfinder: Hochmann, Sven, 01259 Dresden (DE); Müller, Stefan, 01109 Dresden (DE); Leibiger, Jörg, 01705 Freital (DE)
(74) Vertreter: Schmidt, Steffen J.

(57) **Zusammenfassung**

Ein Verfahren zur Herstellung einer Membran-Elektroden-Anordnung, MEA, umfasst zumindest die Schritte:
- Bereitstellen zumindest einer Trägerbahn;
- Fördern der Trägerbahn entlang eines Förderwegs;
- Fördern einer luftdurchlässigen Stützbahn mit zumindest einer Vakuumtrommel, wobei zumindest ein MEA-Komponentenabschnitt auf der geförderten luftdurchlässigen Stützbahn angeordnet ist;
- Anordnen des MEA-Komponentenabschnitts auf der Trägerbahn, wobei der MEA-Komponentenabschnitt mit einer der luftdurchlässigen Stützbahn abgewandten Oberfläche auf der Trägerbahn angeordnet wird;
- Ablösen der luftdurchlässigen Stützbahn von dem auf der Trägerbahn angeordneten MEA-Komponentenabschnitt.

## Beschreibung

### Hintergrund

Hier werden ein Verfahren und eine Vorrichtung zur Herstellung einer Membran-Elektroden-Anordnung, zum Beispiel einer Membran-Elektroden-Anordnung für eine Brennstoffzelle, beschrieben.

### Stand der Technik

Ein bekanntes Verfahren zur Herstellung einer Membran-Elektroden-Anordnung für eine Brennstoffzelle ist das sogenannte Pick-and-Place-Verfahren. Hierbei kommen Roboter oder auf Schienen angeordnete Greifer zum Einsatz, welche Bewegungen in unterschiedlichen Raumrichtungen ausführen können, um die unterschiedlichen Komponenten der jeweiligen Membran-Elektroden-Anordnung mit der erforderlichen Genauigkeit zu platzieren. Ein solches Pick-and-Place-Verfahren zum Herstellen von Membran-Elektroden-Anordnungen und Brennstoffzellen in der Großserie ist im Hinblick auf die Materialkosten und auch aufgrund der erforderlichen Handhabung der filigranen und schmutzempfindlichen Komponenten anspruchsvoll.

Weiter ist bekannt, einen Träger für eine Membran und/oder eine Elektrode als Teil einer durchgängigen Materialbahn bereitzustellen. Alternativ kann auch eine Membran und/oder eine Elektrode als Materialbahn bereitgestellt werden. Die Materialbahn kann hierbei eine Mehrzahl von Bearbeitungsstationen durchlaufen, wobei zumindest eine zweite Komponente der Membran-Elektroden-Anordnung mit der Materialbahn verbunden wird. Ein solches Verfahren wird zum Beispiel durch das Dokument DE 10 2015 010 440 A1 offenbart.

Weitere Membran-Elektroden-Anordnungen sowie zugehörige Fertigungsverfahren sind aus den Dokumenten DE 10 2010 049 548 A1, DE 10 2010 054 199 A1, WO 2021/089 093 A1, US 2016/0 141 642 A1, DE 10 2016 001 817 A1, US 2016/0 111 734 A1, KR 10 2016 0 131 748 A und DE 10 2011 105 180 A1 bekannt.

Ein Nachteil bekannter Fertigungsverfahren für Membran-Elektroden-Anordnungen mit zumindest zunächst durchgängigen Materialbahnen ist, dass die Materialbahnen einerseits sehr dünn und somit sehr empfindlich sind. Daher kann keine oder nur eine geringe Zugkraft auf die Materialbahnen ausgeübt werden, ohne diese zu beschädigen. Die Materialbahnen können daher nicht oder nur unzureichend aufgespannt oder fixiert werden, wodurch eine Fertigungsgenauigkeit negativ beeinträchtigt wird. Eine Verbesserung der Fixierung der Materialbahnen, insbesondere während eines Anordnens der Komponenten für eine Membran-Elektroden-Anordnung aneinander oder aufeinander ist daher wünschenswert.

Ein weiterer Nachteil bekannter Fertigungsverfahren für Membran-Elektroden-Anordnungen mit zumindest zunächst durchgängigen Materialbahnen ist, dass ein Abstand von in einem Verfahrensschritt vereinzelten oder voneinander getrennten Materialbahn- oder Komponentenabschnitten nicht ohne Unterbrechung der Fertigung verändert werden kann. Mit anderen Worten kann eine als Materialbahn bereitgestellte Komponente zwar in mehrere Abschnitte zertrennt werden, jedoch liegen diese Komponentenabschnitte anschließend unmittelbar aneinander an, sodass das Anordnen von weiteren, insbesondere größeren, Komponenten auf den vereinzelten Komponentenabschnitten nicht möglich ist. Eine Veränderung eines Abstands zwischen vereinzelten oder voneinander getrennten Materialbahn- oder Komponentenabschnitten ermöglicht, ohne hierbei einen kontinuierlichen Fertigungsvorgang zu unterbrechen, ist daher wünschenswert.

### Zu lösende Aufgabe

Es besteht somit ein Bedarf an einem verbesserten Fertigungsverfahren und einer verbesserten Herstellungsvorrichtung zur Herstellung einer Membran-Elektroden-Anordnung, die insbesondere ein Anordnen der Komponenten für die Membran-Elektroden-Anordnung aneinander oder aufeinander verbessert.

### Lösung

Diese Aufgabe wird durch ein Verfahren nach dem Anspruch 1 sowie durch eine Vorrichtung nach dem unabhängigen Vorrichtungsanspruch gelöst. Ausgestaltungen dieser Lösung werden durch die auf diese Ansprüche zurückbezogenen Ansprüche definiert.

Ein Verfahren zur Herstellung einer Membran-Elektroden-Anordnung, MEA, umfasst zumindest die Schritte:
- Bereitstellen zumindest einer Trägerbahn;
- Fördern der Trägerbahn entlang eines Förderwegs;
- Fördern einer luftdurchlässigen oder gasdurchlässigen Stützbahn mit zumindest einer Vakuumtrommel, wobei ein oder mehrere MEA-Komponentenabschnitte auf der geförderten luftdurchlässigen Stützbahn angeordnet sind;
- Anordnen eines oder mehrerer MEA-Komponentenabschnitte auf der Trägerbahn, wobei die MEA-Komponentenabschnitte mit einer der luftdurchlässigen Stützbahn jeweils abgewandten Oberfläche auf der Trägerbahn angeordnet werden; und
- Ablösen der luftdurchlässigen Stützbahn von den auf der Trägerbahn angeordneten MEA-Komponentenabschnitten.

Optional kann das Verfahren zur Herstellung der MEA weiter einen der folgenden Schritte umfassen:
- Bereitstellen der luftdurchlässigen Stützbahn;
- Anordnen eines oder mehrerer MEA-Komponentenabschnitte oder einer MEA-Komponente auf der luftdurchlässigen Stützbahn, wobei die MEA-Komponentenabschnitte oder die MEA-Komponente insbesondere mittels eines Unterdrucks auf der Stützbahn zumindest temporär durch die Vakuumtrommel fixiert werden.

Ein Vorteil dieses Verfahrens ist es, dass die MEA-Komponentenabschnitte und/oder die MEA-Komponente spannungsfrei auf der Trägerbahn gefördert werden können. Während der Förderung auftretende Spannkräfte und/oder durch die Förderung verursachte Spannkräfte können durch die Stützbahn aufgenommen oder kompensiert werden. Auf die MEA-Komponente und/oder die MEA Komponentenabschnitte selbst wirken während der Förderung keine oder kaum (Zug- oder Spann-)Kräfte, insbesondere keine oder kaum (Zug-oder Spann-)kräfte in der Förderrichtung der MEA-Komponente und/oder der MEA-Komponentenabschnitte und der Stützbahn. Einer Beschädigung der MEA-Komponente und/oder der MEA-Komponentenabschnitte kann so entgegengewirkt werden.

Die MEA-Komponente kann zum Beispiel eine, insbesondere Katalysatorbeschichtete, Membran oder eine Gasdiffusionsschicht umfassen. Diese Membran und/oder diese Gasdiffusionsschicht können jeweils eine Dicke von 5 µm bis 25 µm, insbesondere eine Dicke von 5 µm bis 8 µm, aufweisen. Ein Vorteil der Verwendung einer Stützbahn ist, dass diese dünnen MEA-Komponenten verlässlich und/oder beschädigungsfrei gehandhabt werden können.

Ein weiterer Vorteil dieses Verfahrens ist, dass einer Verschmutzung der Vakuumtrommel und/oder weiterer Förderelemente durch einen optional auf die MEA-Komponentenabschnitte oder auf die Trägerbahn aufgetragenen oder applizierten Klebstoff entgegengewirkt werden kann. Die Stützbahn kann breiter als die MEA-Komponente und/oder die MEA-Komponentenabschnitte sein und/oder eine größere Fläche als die MEA-Komponente aufweisen. Insbesondere kann die Stützbahn die auf ihr angeordnete MEA-Komponente und/oder MEA-Komponentenabschnitte in einer Richtung quer zur Förderrichtung überragen und/oder über die MEA-Komponente oder über die MEA-Komponentenabschnitte in einer Richtung quer zur Förderrichtung überstehen. Der auf die MEA-Komponente oder die MEA-Komponentenabschnitte aufgetragene Klebstoff kann daher, zum Beispiel im Falle eines unbeabsichtigten Verschmierens oder im Falle einer fehlerhaften Applikation des Klebstoffs, von der Stützbahn aufgenommen werden und/oder mit der Stützbahn abtransportiert werden.

Eine Vakuumtrommel ist eine Fördertrommel oder ein Förderzylinder, der dazu geeignet ist, eine Materialbahn, zum Beispiel eine Stützbahn oder eine MEA-Komponente, und/oder einen oder mehrere vereinzelte MEA-Komponentenabschnitte, insbesondere schlupffrei, zu fördern. Dabei ist die Vakuumtrommel dazu eingerichtet, die Materialbahn oder die Materialbahnabschnitte mittels eines Unterdrucks an einer Trommel- oder Zylindermantelfläche zu fixieren. Der Unterdruck kann zum Beispiel mittels Öffnungen in der Trommel- oder Zylindermantelfläche auf die Stützbahn und/oder auf die auf der Stützbahn angeordneten MEA-Komponentenabschnitte und/oder die MEA-Komponente wirken und diese an der Trommel- oder Zylindermantelfläche fixieren.

Die Öffnungen in der Trommel- oder Zylindermantelfläche und/oder der durch diese Öffnungen wirkende Unterdruck können durch eine Steuerung selektiv aktiviert oder deaktiviert werden und/oder abhängig von einer Drehung der Vakuumtrommel und/oder abhängig von vorbestimmten Zeitintervallen gesteuert oder geregelt werden.

Optional kann das Ablösen der luftdurchlässigen Stützbahn von dem auf der Trägerbahn angeordneten MEA-Komponentenabschnitt das Aufheben des Unterdrucks umfassen. Mit anderen Worten kann durch das Aufheben oder kontrollierte Kompensieren eines auf die Trägerbahn und/oder auf den MEA-Komponentenabschnitt wirkenden Unterdrucks eine Fixierung der Stützbahn und des MEA-Komponentenabschnitts aneinander sowie an der Trommel- oder Zylindermantelfläche der Vakuumtrommel aufgehoben werden. Weiter kann die Vakuumtrommel dazu angeordnet und ausgebildet sein, den MEA-Komponentenabschnitt während des Anordnens auf der Trägerbahn an die Trägerbahn anzupressen oder aufzuwalzen.

Das Anordnen des MEA-Komponentenabschnitts auf der Trägerbahn kann ein stoffschlüssiges thermisches Fügeverfahren, insbesondere ein Laminationsverfahren umfassen, oder eine Kaltlaminationsverfahren welches den MEA-Komponentenabschnitt auf der Trägerbahn fixiert. Optional kann hierfür eine separate Laminationsvorrichtung und/oder eine separate Erwärmungsvorrichtung vorgesehen sein. Auch eine, insbesondere separate, Anpressvorrichtung, die dazu ausgebildet und angeordnet ist, die Trägerbahn und einen MEA-Komponentenabschnitt aneinander anzupressen, kann vorgesehen sein. Alternativ oder ergänzend kann ein MEA-Komponentenabschnitt auch mit/durch die Vakuumtrommel an die Trägerbahn und/oder die Trägerrahmen angepresst oder angewalzt werden. Ein Vorteil hierbei ist, dass ein möglicherweise während des Anpressens oder Anwalzens des MEA-Komponentenabschnitts an die Trägerbahn und/oder die Trägerrahmen austretender überschüssiger Klebstoff von der Stützbahn aufgenommen und/oder abtransportiert werden kann und insbesondere eine Verschmutzung oder Verunreinigung der Vakuumtrommel vermieden werden kann.

Weiter kann das Verfahren das Auftragen eines Klebstoffs, zum Beispiel mit einer Klebstoffapplikationsvorrichtung, auf die entlang des Förderwegs geförderte Trägerbahn umfassen. Alternativ oder ergänzend kann ein Klebstoff auch auf die MEA-Komponente und/oder auf einen oder mehrere MEA-Komponentenabschnitte aufgetragen oder appliziert werden, zum Beispiel mit einer Klebstoffapplikationsvorrichtung.

Die Stützbahn kann als ein fortlaufendes Bahnmaterial, insbesondere von einer Stützbahnrolle, bereitgestellt werden. Mit anderen Worten kann die Stützbahn als ein quasi-unendliches fortlaufendes Bahnmaterial bereitgestellt werden. Die Stützbahn kann Segmentierungen oder eine gleichförmige Oberflächenstruktur aufweisen. Die Stützbahn kann ein Textilmaterial und/oder ein Kunststoffmaterial umfassen. In einer Variante kann die Stützbahn eine (Kunststoff-)Gewebestruktur aufweisen. Die Stützbahn kann eine größere Dicke und/oder eine größere/höhere Zugfestigkeit aufweisen als die erste oder zweite MEA-Komponente.

Optional kann die Stützbahn mehrere Ausnehmungen oder Perforierungen aufweisen, welche die Luftdurchlässigkeit der Stützbahn herstellen. In anderen Varianten kann die Stützbahn alternativ oder ergänzend eine luftdurchlässige Gewebestruktur und/oder eine luftdurchlässige Kunststoffmembran aufweisen.

Die Trägerbahn kann einen oder mehrere Trägerrahmen für eine MEA umfassen oder ausbilden. Insbesondere kann die Trägerbahn als ein fortlaufendes Bahnmaterial, zum Beispiel als quasi-unendliches Bahnmaterial, von einer Trägerbahnrolle bereitgestellt werden. Mit anderen Worten kann die Trägerbahn mehrere Trägerrahmen aufweisen, die in einem Fertigungsschritt voneinander getrennt oder vereinzelt werden können, zum Beispiel durch ein Zerschneiden der Trägerbahn.

Optional können eine oder mehrere Ausnehmungen oder Öffnungen, insbesondere mit einer Stanzvorrichtung und/oder mit einer Fräsvorrichtung, in den oder die Trägerrahmen eingebracht werden.

Optional kann das Verfahren zur Herstellung der MEA weiter den folgenden Schritt umfassen:
- Herstellen mehrerer MEA-Komponentenabschnitte durch Zerschneiden der als fortlaufendes Bahnmaterial bereitgestellten MEA-Komponente mit einer Schneidvorrichtung, insbesondere mit einem Schneidzylinder.

Ein Schneidzylinder kann insbesondere eine Schneidwalze oder eine sonstige rotierende Schneidvorrichtung sein, die dazu geeignet ist, eine als fortlaufendes Bahnmaterial bereitgestellte MEA-Komponente in mehrere MEA-Komponentenabschnitte zu zerschneiden oder zu zertrennen. Jedoch können in anderen Ausführungsformen auch andere Trenn- oder Schneidvorrichtungen zum Zertrennen oder zum Separieren einer als fortlaufendes Bahnmaterial bereitgestellten MEA-Komponente im mehrere MEA-Komponentenabschnitte verwendet werden, ausdrücklich auch solche, die keine rotierenden (Schneid-)Elemente aufweisen.

Die MEA-Komponente kann eine Gasdiffusionsschicht, GDL, umfassen, insbesondere eine Anode oder eine Katode in Form einer GDL. Weiter kann die MEA-Komponente eine, insbesondere katalysatorbeschichtete, Membran, CCM, umfassen. Die MEA-Komponente kann zum Beispiel als ein fortlaufendes Bahnmaterial, insbesondere von einer GDL- oder CCM-Rolle, bereitgestellt werden.

In einer Ausführungsform kann das Zerschneiden einer als fortlaufendes Bahnmaterial bereitgestellten MEA-Komponente stattfinden, während die MEA-Komponente auf der luftdurchlässigen Stützbahn angeordnet ist. Die luftdurchlässige Stützbahn muss durch das Zerschneiden der MEA-Komponente nicht zertrennt werden.

Mit anderen Worten kann die Schneidvorrichtung dazu eingerichtet sein, eine durch die Vakuumtrommel fixierte und/oder auf der Vakuumtrommel, insbesondere mit der Stützbahn, angeordnete MEA-Komponente zu zerschneiden oder zu zertrennen. Zum Beispiel können so mehrere MEA-Komponentenabschnitte hergestellt werden, die durch die Vakuumtrommel fixiert sind und/oder auf der Vakuumtrommel, insbesondere auf der durch die Vakuumtrommel fixierten Stützbahn, angeordnet sind. Die Stützbahn kann hierbei undurchtrennt oder undurchschnitten verbleiben. Die Schneidvorrichtung kann dazu eingerichtet sein die als fortlaufendes Bahnmaterial bereitgestellte MEA-Komponente zu zerschneiden ohne die Stützbahn zu zerschneiden, wobei die MEA-Komponente während des Zerschneidens auf der Stützbahn angeordnet ist.

Ein Vorteil hierbei ist, dass die MEA-Komponente zum Beispiel mit einem Schneidzylinder zerschnitten werden kann, wobei die luftdurchlässige Stützbahn hierbei einerseits eine gewünschte unveränderte Positionierung der so hergestellten Komponentenabschnitte an/auf der Mantelfläche der Vakuumtrommel sicherstellen oder zumindest befördern kann und andererseits die Vakuumtrommel vor einem unmittelbaren Kontakt mit den Schneidwerkzeugen/Klingen der Schneidvorrichtung schützen kann. Mit anderen Worten kann die Stützbahn zwischen MEA-Komponente und Trommel- oder Zylindermantelfläche der Vakuumtrommel angeordnet sein. Hierdurch kann ein unmittelbarer Kontakt der Mantelfläche mit den Schneidwerkzeugen/Klingen der Schneidvorrichtung vermieden und gleichzeitig die vollständige Durchtrennung oder das vollständige Durchschneiden der MEA-Komponente sichergestellt oder zumindest befördert werden.

Eine Vorrichtung zur Herstellung einer Membran-Elektroden-Anordnung umfasst:
(i) eine Trägerbahnbereitstellungsvorrichtung, die dazu eingerichtet ist, zumindest eine Trägerbahn für eine Membran-Elektroden-Anordnung bereitzustellen;
(ii) eine Fördervorrichtung, die dazu eingerichtet ist, die zumindest eine Trägerbahn kontinuierlich oder taktweise entlang eines Förderwegs zu fördern;
(iii) eine Vakuumtrommel, die dazu eingerichtet ist, eine luftdurchlässige Stützbahn zu fördern, wobei ein oder mehrere MEA-Komponentenabschnitte auf der geförderten luftdurchlässigen Stützbahn angeordnet sind; und
(iv) eine Anordnungsvorrichtung, die dazu eingerichtet ist, zumindest einen MEA-Komponentenabschnitt mit einer der luftdurchlässigen Stützbahn abgewandten Oberfläche auf der Trägerbahn anzuordnen, wobei die Vorrichtung zur Herstellung einer Membran-Elektroden-Anordnung ferner dazu eingerichtet ist, die luftdurchlässige Stützbahn von dem auf der Trägerbahn angeordneten MEA-Komponentenabschnitt abzulösen.

Die Trägerbahnbereitstellungsvorrichtung kann insbesondere eine Trägerbahnrolle sein, die dazu eingerichtet ist, die Trägerbahn als ein fortlaufendes Bahnmaterial, zum Beispiel als quasi-unendliches Bahnmaterial, bereitzustellen. Die Trägerbahn kann mehrere Trägerrahmen aufweisen, die durch eine Trenn- oder Schneidvorrichtung voneinander getrennt oder vereinzelt werden können, zum Beispiel durch ein Zerschneiden der Trägerbahn.

Die Fördervorrichtung kann ein, insbesondere umlaufendes, Vakuumtransportband sein, dass dazu eingerichtet ist, eine Trägerbahn kontinuierlich zu fördern und/oder während des Förderns mittels eines Unterdrucks zu fixieren/halten. Die Fördervorrichtung kann eine Trägerbahn insbesondere spannungsfrei fördern. Spannungsfrei heißt, dass während des Förderns eines Bahnmaterials, insbesondere der Trägerbahn, keine (Zug-)Kraft in der Förderrichtung auf das Bahnmaterial oder die Trägerbahn ausgeübt wird. Mit anderen Worten bedeutet spannungsfrei, dass das Bahnmaterial keine oder kaum eine durch die Förderung bedingte Materialspannung in einer Richtung parallel zur Förderrichtung aufweist.

Die Anordnungsvorrichtung kann eine separate Vorrichtung, zum Beispiel eine Laminationsvorrichtung und/oder eine Erwärmungsvorrichtung sein, die zur Durchführung eines stoffschlüssigen thermischen Fügeverfahrens und/oder eines Kaltlaminationsverfahrens eingerichtet ist. In einer Variante kann auch die Vakuumtrommel die Anordnungsvorrichtung und/oder zumindest einen Teil der Anordnungsvorrichtung ausbilden. Durch ein Deaktivieren oder Aufheben des Unterdrucks kann eine MEA-Komponente oder ein MEA-Komponentenabschnitt von der Stützbahn abgelöst werden, wobei die Vakuumtrommel gleichzeitig dazu angeordnet und ausgebildet sein kann, die abgelöste MEA-Komponente oder den abgelösten MEA-Komponentenabschnitt während des Anordnens auf der Trägerbahn an die Trägerbahn anzupressen oder aufzuwalzen.

Ein Verfahren zur Herstellung einer Membran-Elektroden-Anordnung, MEA, umfasst zumindest die Schritte:
- Bereitstellen zumindest einer ersten MEA-Komponente als fortlaufendes Bahnmaterial;
- Fördern der ersten MEA-Komponente entlang eines Förderwegs;
- Bereitstellen einer zweiten MEA-Komponente in Form eines fortlaufenden Bahnmaterials;
- Fördern der zweiten MEA-Komponente mit zumindest einer ersten Vakuumtrommel;
- Herstellen mehrerer MEA-Komponentenabschnitte durch Zerschneiden der als fortlaufendes Bahnmaterial bereitgestellten zweiten MEA-Komponente mit einer Schneidvorrichtung;
- Anordnen der MEA-Komponentenabschnitte auf der ersten MEA-Komponente.

Die als fortlaufendes Bahnmaterial bereitgestellte zweite MEA-Komponente liegt während des Zerschneidens in die mehreren MEA-Komponentenabschnitte an einer Mantelfläche der ersten Vakuumtrommel an und wird durch diese schlupffrei und kontinuierlich gefördert.

Ein Vorteil hierbei ist, dass die MEA-Komponente während des Zerschneidens in mehrere MEA-Komponentenabschnitte durch die erste Vakuumtrommel fixiert ist, sodass eine Positionierung der MEA-Komponente und/oder MEA-Komponentenabschnitte während und/oder nach dem Zerschneiden erhalten werden kann. Die Verwendung einer Vakuumtrommel in Kombination mit einer Schneidvorrichtung, insbesondere mit einem Schneidzylinder, erlaubt es, die Positionierung der MEA-Komponentenabschnitte für die weitere Fertigung mit hoher Präzision vorzugeben und/oder zu erhalten.

Eine Vakuumtrommel ist eine Fördertrommel oder ein Förderzylinder, der dazu geeignet ist, eine Materialbahn, zum Beispiel eine als Bahnmaterial bereitgestellte MEA-Komponente, und/oder einen oder mehrere vereinzelte Materialbahnabschnitte, insbesondere schlupffrei, zu fördern, wobei die Vakuumtrommel hierbei dazu eingerichtet ist, die Materialbahn oder die Materialbahnabschnitte mittels eines Unterdrucks an einer Trommel- oder Zylindermantelfläche zu fixieren. Der Unterdruck kann zum Beispiel mittels Öffnungen in der Trommel- oder Zylindermantelfläche auf die Stützbahn und/oder auf die auf der Stützbahn angeordnete MEA-Komponente wirken und diese an der Trommel- oder Zylindermantelfläche fixieren.

Die Schneidvorrichtung kann insbesondere ein Schneidzylinder sein. Ein Schneidzylinder kann insbesondere eine Schneidwalze oder eine sonstige rotierende Schneidvorrichtung sein, die dazu geeignet ist, eine als fortlaufendes Bahnmaterial bereitgestellte MEA-Komponente, zum Beispiel die zweite MEA-Komponente, in mehrere MEA-Komponentenabschnitte zu zerschneiden oder zu zertrennen. Jedoch können in anderen Ausführungsformen auch beliebige andere Trenn- oder Schneidvorrichtungen zum Zertrennen oder zum Separieren einer als fortlaufendes Bahnmaterial bereitgestellten MEA-Komponente im mehrere MEA-Komponentenabschnitte verwendet werden, ausdrücklich auch solche, die keine rotierenden (Schneid-)Elemente aufweisen.

Die Schneidvorrichtung kann insbesondere dazu eingerichtet sein, die zweite MEA-Komponente in mehrere Komponentenabschnitte zu Zerschneiden, während die zweite MEA-Komponente an einer Trommel- oder Zylindermantelfläche der ersten Vakuumtrommel mittels Unterdruck fixiert ist. Die durch Zerschneiden der zweiten MEA-Komponente hergestellten Komponentenabschnitte können ebenfalls mittels Unterdruck an einer Trommel- oder Zylindermantelfläche der ersten Vakuumtrommel fixiert sein. Die erste Vakuumtrommel kann dazu eingerichtet sein, die Komponentenabschnitte durch ein Aufheben oder Deaktivieren des Unterdrucks abzulösen oder freizugeben. Mit anderen Worten kann durch das Aufheben oder kontrollierte Kompensieren eines auf die Komponentenabschnitte wirkenden Unterdrucks eine Fixierung der Komponentenabschnitte an der Trommel- oder Zylindermantelfläche der ersten Vakuumtrommel aufgehoben werden. Die Komponentenabschnitte können anschließend auf der ersten MEA-Komponente oder auf/an der Trommel- oder Zylindermantelfläche einer weiteren oder zweiten Vakuumtrommel angeordnet und/oder fixiert werden.

Ein Förderweg ist ein vorbestimmter Weg, entlang dessen MEA-Komponenten und/oder MEA-Komponentenabschnitte in einer vorbestimmten Förderrichtung gefördert werden. Mit anderen Worten ist der Förderweg der Weg, den die MEA-Komponenten und/oder MEA-Komponentenabschnitte während der Fertigung der MEA zurücklegen. Der Förderweg und/oder die Förderrichtung kann zum Beispiel durch ein, insbesondere umlaufendes, Förderband vorgegeben und/oder definiert sein.

Das Anordnen der MEA-Komponentenabschnitte auf der ersten MEA-Komponente kann ein stoffschlüssiges thermisches Fügeverfahren, insbesondere ein Laminationsverfahren und/oder ein Kaltlaminationsverfahren, umfassen, welches die MEA-Komponentenabschnitte auf der ersten MEA-Komponente fixiert. Optional kann hierfür eine separate Laminationsvorrichtung und/oder eine separate Erwärmungsvorrichtung vorgesehen sein. Auch eine, insbesondere separate, Anpressvorrichtung, die dazu ausgebildet und angeordnet ist, MEA-Komponenten aneinander oder aufeinander anzupressen, kann vorgesehen sein. Weiter kann das Verfahren das Auftragen eines Klebstoffs, zum Beispiel mit einer Klebstoffapplikationsvorrichtung, auf die entlang des Förderwegs geförderte erste MEA-Komponente und/oder auf die MEA-Komponentenabschnitte umfassen.

Die erste MEA-Komponente kann eine als fortlaufendes, insbesondere quasi-unendliches, Bahnmaterial bereitgestellte Trägerbahn umfassen. Die Trägerbahn kann einen oder mehrere Trägerrahmen für eine MEA umfassen oder ausbilden. Insbesondere kann die Trägerbahn als ein fortlaufendes Bahnmaterial, zum Beispiel als quasi-unendliches Bahnmaterial von einer Trägerbahnrolle, bereitgestellt werden. Mit anderen Worten kann die Trägerbahn mehrere Trägerrahmen aufweisen, die in einem Fertigungsschritt voneinander getrennt oder vereinzelt werden können, zum Beispiel durch ein Zerschneiden der Trägerbahn.

Die erste und/oder die zweite MEA-Komponente kann eine Gasdiffusionsschicht, GDL, umfassen, insbesondere eine Anode oder eine Katode in Form einer GDL. Weiter kann die erste und/oder die zweite MEA-Komponente eine, insbesondere katalysatorbeschichtete, Membran, CCM, umfassen. Die erste und/oder die zweite MEA-Komponente kann zum Beispiel als ein fortlaufendes Bahnmaterial, insbesondere von einer GDL- oder CCM-Rolle, bereitgestellt werden. Die zweite MEA-Komponente kann mehrere MEA-Komponentenabschnitte aufweisen, die in einem Fertigungsschritt voneinander getrennt oder vereinzelt werden können, zum Beispiel durch ein Zerschneiden der zweiten MEA-Komponente.

In einer Variante kann das Fördern der zweiten MEA-Komponente ohne eine auf das Material der zweiten MEA-Komponente in der Förderrichtung wirkende Spannkraft erfolgen. Die zweite MEA-Komponente kann insbesondere spannungsfrei zur ersten Vakuumtrommel gefördert werden. Spannungsfrei heißt, dass während des Förderns eines Bahnmaterials, insbesondere der zweiten MEA-Komponente, keine (Zug-)Kraft in der Förderrichtung auf das Bahnmaterial ausgeübt wird. Mit anderen Worten bedeutet spannungsfrei, dass das Bahnmaterial keine oder kaum eine durch die Förderung bedingte Materialspannung in einer Richtung parallel zu Förderrichtung aufweist.

Ein Fördern der zweiten MEA-Komponente ohne eine auf das Material der zweiten MEA-Komponente in der Förderrichtung wirkende Spannkraft kann zum Beispiel durch eine aufeinander abgestimmte oder geregelte Winkelgeschwindigkeit der ersten Vakuumtrommel und einer GDL- oder CCM-Rolle erfolgen, welche die zweite MEA-Komponente zum Beispiel bereitstellen kann.

Optional kann das Verfahren zur Herstellung der MEA weiter den folgenden Schritt umfassen:
- Anordnen der MEA-Komponentenabschnitte auf zumindest einer weiteren Vakuumtrommel und schlupffreies Fördern der MEA-Komponentenabschnitte mit der weiteren oder zweiten Vakuumtrommel, wobei die zumindest eine weitere oder zweite Vakuumtrommel eine Mantelfläche mit einer haftungsreduzierenden Beschichtung, insbesondere mit einer Teflon-Beschichtung, aufweist.

Mit anderen Worten können die Komponentenabschnitte von der ersten Vakuumtrommel auf die weitere Vakuumtrommel übertragen oder weitergegeben werden. Anschließend können die Komponentenabschnitte von der weiteren Vakuumtrommel kontinuierlich gefördert werden und/oder auf der ersten MEA-Komponente angeordnet werden, während diese entlang des Förderwegs gefördert wird.

Ein Vorteil hierbei ist, dass die MEA-Komponentenabschnitte mit/durch die weitere Vakuumtrommel mit der haftungsreduzierenden Beschichtung an die erste MEA-Komponente, zum Beispiel an die Trägerbahn und/oder die Trägerrahmen, angepresst oder angewalzt werden können. Die weitere Vakuumtrommel kann eine Anordnungsvorrichtung oder einen Teil einer Anordnungsvorrichtung, die dazu eingerichtet ist, die MEA-Komponentenabschnitte auf der ersten MEA-Komponente anzuordnen, ausbilden. Vorteilhaft hieran ist, dass sich die MEA-Komponentenabschnitte von der weiteren Vakuumtrommel aufgrund der haftungsreduzierenden Beschichtung besonders gut ablösen lassen und eine Fehlpositionierung der MEA-Komponentenabschnitte aufgrund eines Anhaftens oder unregelmäßigen Ablösens der MEA-Komponentenabschnitte von der Vakuumtrommel vermieden werden kann. Hierdurch können sowohl eine Fertigungspräzision als auch eine Fertigungsgeschwindigkeit verbessert werden.

Die Verwendung einer weiteren oder zweiten Vakuumtrommel mit einer haftungsreduzierenden Beschichtung ist auch deshalb vorteilhaft, da die haftungsreduzierende Beschichtung, insbesondere eine Teflon-Beschichtung, empfindlich gegenüber einem möglichen Kontakt mit den Klingen oder Schneidwerkzeugen der Schneidvorrichtung ist. Da ein vollständiges Durchtrennen oder Zerschneiden der zweiten MEA-Komponente zur Herstellung der MEA-Komponentenabschnitte notwendig ist, kann ein zumindest teilweises Kontaktieren der Klingen oder Schneidwerkzeuge mit der Oberfläche der Vakuumtrommel nicht ausgeschlossen werden, wenn die zweite MEA-Komponente während des Zerschneidens in die mehreren MEA-Komponentenabschnitte an einer Mantelfläche/Oberfläche einer Vakuumtrommel anliegt und kontinuierlich gefördert wird. Es ist daher vorteilhaft, das Zerschneiden der zweiten MEA-Komponente durchzuführen, während diese durch eine erste Vakuumtrommel gefördert wird, und das Anordnen der MEA-Komponentenabschnitte auf der ersten MEA-Komponente mit einer weiteren oder zweiten Vakuumtrommel durchzuführen, die eine haftungsreduzierende Beschichtung auf ihrer Mantelfläche aufweist. Die Mantelfläche der ersten Vakuumtrommel kann, abweichend von der Mantelfläche der weiteren oder zweiten Vakuumtrommel, eine Beschichtung aufweisen, die unempfindlich oder tolerant gegenüber einem Kontakt mit den Klingen oder Schneidwerkzeugen der Schneidvorrichtung ist. Zum Beispiel kann die erste Vakuumtrommel eine Gummi- oder Kunststoffbeschichtung auf ihrer Mantelfläche aufweisen und/oder zumindest teilweise aus einem Gummi- oder Kunststoffmaterial gefertigt sein. Die Übergabe oder Anordnung der Komponentenabschnitte von der ersten Vakuumtrommel an/auf die weitere oder zweite Vakuumtrommel ist weniger anspruchsvoll als das Anordnen der MEA-Komponentenabschnitte auf der ersten MEA-Komponente, da die zweite Vakuumtrommel die jeweiligen MEA-Komponentenabschnitte aktiv mit/durch einen Unterdruck ansaugen kann und so ein Ablösen der MEA-Komponentenabschnitte von der ersten Vakuumtrommel zumindest unterstützen kann.

Eine Vorrichtung zur Herstellung einer Membran-Elektroden-Anordnung, MEA, umfasst:
(i) eine Bereitstellungsvorrichtung, die dazu eingerichtet ist, eine erste MEA-Komponente in Form eines fortlaufenden Bahnmaterials für eine Membran-Elektroden-Anordnung bereitzustellen;
(ii) eine Fördervorrichtung, die dazu eingerichtet ist, die erste MEA-Komponente kontinuierlich oder taktweise entlang eines Förderwegs zu fördern;
(iii) eine erste Vakuumtrommel, die dazu eingerichtet ist, eine zweite MEA-Komponente in Form eines fortlaufenden Bahnmaterials kontinuierlich und schlupffrei zu fördern,
(iv) eine Schneidvorrichtung, die dazu eingerichtet ist, die als fortlaufendes Bahnmaterial bereitgestellte zweite MEA-Komponente in mehrere MEA-Komponentenabschnitte zu zerschneiden, während die als fortlaufendes Bahnmaterial bereitgestellte zweite MEA-Komponente an einer Mantelfläche der Vakuumtrommel anliegt, und
(v) eine Anordnungsvorrichtung, die dazu eingerichtet ist, die MEA-Komponentenabschnitte auf der ersten MEA-Komponente anzuordnen.

Die Bereitstellungsvorrichtung kann insbesondere eine Trägerbahnrolle sein, die dazu eingerichtet ist, eine Trägerbahn als ein fortlaufendes Bahnmaterial, zum Beispiel als quasi-unendliches Bahnmaterial, bereitzustellen. Die Trägerbahn kann mehrere Trägerrahmen aufweisen, die durch eine Trenn- oder Schneidvorrichtung voneinander getrennt oder vereinzelt werden können, zum Beispiel durch ein Zerschneiden der Trägerbahn.

Die Fördervorrichtung kann ein, insbesondere umlaufendes, Vakuumtransportband sein, dass dazu eingerichtet ist, eine erste MEA-Komponente, insbesondere eine Trägerbahn kontinuierlich zu fördern und/oder während des Förderns mittels eines Unterdrucks zu fixieren/halten. Die Fördervorrichtung kann die erste MEA-Komponente insbesondere spannungsfrei fördern. Spannungsfrei heißt, dass während des Förderns eines Bahnmaterials, insbesondere der Trägerbahn, keine (Zug-)Kraft in der Förderrichtung auf das Bahnmaterial/Trägerbahn ausgeübt wird. Mit anderen Worten bedeutet spannungsfrei, dass das Bahnmaterial keine oder kaum eine durch die Förderung bedingte Materialspannung in einer Richtung parallel zu Förderrichtung aufweist.

Die Anordnungsvorrichtung kann eine separate Vorrichtung, zum Beispiel eine Laminationsvorrichtung und/oder eine Erwärmungsvorrichtung sein, die zur Durchführung eines stoffschlüssigen thermischen Fügeverfahrens und/oder eines Kaltlaminationsverfahrens eingerichtet ist. In einer Variante kann eine Vakuumtrommel die Anordnungsvorrichtung und/oder zumindest einen Teil der Anordnungsvorrichtung ausbilden. Durch ein Deaktivieren oder Aufheben des Unterdrucks kann ein MEA-Komponentenabschnitt von der Vakuumtrommel abgelöst werden, wobei diese gleichzeitig dazu angeordnet und ausgebildet sein kann, den abgelösten MEA-Komponentenabschnitt während des Anordnens auf der ersten MEA-Komponente anzuordnen.

Die erste Vakuumtrommel kann eine Mantelfläche aufweisen, die mit einem Gummi- oder Kunststoffmaterial beschichtet ist und/oder zumindest teilweise aus einem Gummi- oder Kunststoffmaterial gefertigt ist.

Optional kann diese Vorrichtung ferner zumindest eine weitere oder zweite Vakuumtrommel umfassen, die dazu eingerichtet ist, die MEA-Komponentenabschnitte von der ersten Vakuumtrommel aufzunehmen oder zu übernehmen und anschließend schlupffrei zu fördern, wobei die zumindest eine weitere oder zweite Vakuumtrommel eine Mantelfläche mit einer haftungsreduzierenden Beschichtung, insbesondere mit einer Teflon-Beschichtung, aufweisen kann.

Eine Vorrichtung zur Herstellung einer Membran-Elektroden-Anordnung, MEA, kann ein erstes Vakuumtransportband umfassen, das dazu eingerichtet ist, eine erste MEA-Komponente in Form eines Bahnmaterials kontinuierlich mit einer ersten Fördergeschwindigkeit zu fördern. Eine erste Anordnungsvorrichtung kann dazu eingerichtet sein eine zweite MEA-Komponente und/oder einen MEA-Komponentenabschnitt der zweiten MEA-Komponente zumindest teilweise auf der ersten MEA-Komponente anzuordnen, während die erste MEA-Komponente kontinuierlich durch das erste Vakuumtransportband gefördert wird. Eine erste Schneidvorrichtung kann dazu eingerichtet sein, die als Bahnmaterial bereitgestellte erste MEA-Komponente mit der darauf zumindest teilweise angeordneten zweiten MEA-Komponente in mehrere MEA-Komponentenabschnitte, die jeweils zumindest einen Teil der ersten und der zweiten MEA-Komponente umfassen, zu zerschneiden. Es ist hierbei auch möglich, dass zwischen den mehreren MEA-Komponentenabschnitten, die jeweils zumindest einen Teil der ersten und der zweiten MEA-Komponente umfassen, zusätzlich auch Ausschussabschnitte anfallen oder hergestellt werden, die keine MEA-Komponentenabschnitte sind und nicht zur weiteren Herstellung einer MEA vorgesehen sind. Mit anderen Worten müssen zwei durch Zerschneiden hergestellte MEA-Komponentenabschnitte auf dem ersten Vakuumtransportband nicht zwingend aneinander anliegen, da zwischen zwei MEA-Komponentenabschnitten auch ein Ausschussabschnitt auf dem Vakuumtransportband angeordnet sein kann.

Ein zweites Vakuumtransportband kann dazu eingerichtet sein, die mehreren MEA-Komponentenabschnitte kontinuierlich mit einer zweiten Fördergeschwindigkeit zu fördern, wobei die zweite Fördergeschwindigkeit höher ist als die erste Fördergeschwindigkeit.

Ein Vorteil hierbei ist, dass durch die unterschiedlichen Fördergeschwindigkeiten der Vakuumtransportbänder ein Abstand der MEA-Komponentenabschnitte zueinander variiert, insbesondere vergrößert werden kann, während die MEA-Komponentenabschnitte ununterbrochen und/oder kontinuierlich gefördert werden. Die Fertigung muss für die Variation oder Vergrößerung der Abstände zwischen den Komponentenabschnitten nicht unterbrochen und/oder verlangsamt werden. Die Variation oder Vergrößerung der Abstände zwischen den Komponentenabschnitten mittels zweier Vakuumtransportbänder ist auch deshalb vorteilhaft, da die MEA-Komponentenabschnitte auf dem ersten Vakuumtransportband hergestellt werden können und anschließend ohne Unterbrechung der Fertigung auf dem zweiten Vakuumtransportband weiterverarbeitet werden können. Die Variation oder Vergrößerung des Abstandes zwischen den MEA-Komponentenabschnitten erlaubt es hierbei auch solche Verarbeitungsschritte an/auf den MEA-Komponentenabschnitten vorzunehmen, die mit unmittelbar aneinander anliegenden MEA-Komponentenabschnitten, zum Beispiel unmittelbar nach einem Zerschneiden einer als Bahnmaterial bereitgestellten MEA-Komponente, nicht möglich wären.

Das erste und/oder das zweite Vakuumtransportband können insbesondere dazu eingerichtet sein, die erste MEA-Komponente zu fördern und/oder während des Förderns mittels eines Unterdrucks zu fixieren/halten. Das Vakuumtransportband kann die erste MEA-Komponente insbesondere spannungsfrei fördern. Spannungsfrei heißt, dass während des Förderns eines Bahnmaterials, insbesondere der ersten MEA-Komponente, keine (Zug-)Kraft in der Förderrichtung auf das Bahnmaterial ausgeübt wird. Mit anderen Worten bedeutet spannungsfrei, dass das Bahnmaterial keine oder kaum eine durch die Förderung bedingte Materialspannung in einer Richtung parallel zu Förderrichtung aufweist.

Die erste Schneidvorrichtung kann insbesondere ein Schneidzylinder sein. Ein Schneidzylinder kann insbesondere eine Schneidwalze oder eine sonstige rotierende Schneidvorrichtung sein, die dazu geeignet ist, eine als fortlaufendes Bahnmaterial bereitgestellte MEA-Komponente, zum Beispiel die erste MEA-Komponente, in mehrere MEA-Komponentenabschnitte zu zerschneiden oder zu zertrennen. Jedoch können in anderen Ausführungsformen auch andere Trenn- oder Schneidvorrichtungen zum Zertrennen oder zum Separieren einer als fortlaufendes Bahnmaterial bereitgestellten MEA-Komponente im mehrere MEA-Komponentenabschnitte verwendet werden, ausdrücklich auch solche, die keine rotierenden (Schneid-)Elemente aufweisen.

In einer Variante kann die erste MEA-Komponente eine Gasdiffusionsschicht, GDL, insbesondere eine Anode oder eine Katode in Form einer GDL, umfassen. Die zweite MEA-Komponente kann eine, insbesondere katalysatorbeschichtete, Membran, CCM, umfassen.

Die erste Anordnungsvorrichtung kann dazu eingerichtet sein, die zweite MEA-Komponente als fortlaufendes Bahnmaterial oder als vereinzelte Materialabschnitte, insbesondere als CCM-Membranabschnitte, zur Anordnung auf der ersten MEA-Komponente bereitzustellen. Die erste Anordnungsvorrichtung kann eine Vakuumtrommel umfassen. Optional kann eine ursprünglich als fortlaufendes, insbesondere quasi-unendliches, Bahnmaterial bereitgestellte zweite MEA-Komponente von einer Schneidvorrichtung im mehrere Materialabschnitte zerschnitten werden, während sie an/auf einer Trommel- oder Zylindermantelfläche einer Vakuumtrommel angeordnet ist.

In einer Ausführungsform kann die Vorrichtung zur Herstellung einer Membran-Elektroden-Anordnung weiter eine Übergabevorrichtung umfassen, die dazu eingerichtet ist, die MEA-Komponentenabschnitte von dem ersten Vakuumtransportband auf das zweite Vakuumtransportband zu bewegen oder zu übertragen. Optional kann die Übergabevorrichtung einen Greifer, insbesondere einen Vakuumgreifer, umfassen, der dazu eingerichtet ist, die MEA-Komponentenabschnitte von dem ersten Vakuumtransportband auf das zweite Vakuumtransportband zu bewegen oder zu übertragen. In einer alternativen Ausführungsform können das erste und das zweite Vakuumtransportband auch dazu angeordnet und ausgebildet sein, geförderte Komponentenabschnitte ohne eine zusätzliche Übergabevorrichtung von dem ersten Vakuumtransportband auf das zweite Vakuumtransportband zu übergeben. Das erste und das zweite Vakuumtransportband können hierzu unmittelbar aneinander angrenzend oder unmittelbar nebeneinander angeordnet sein.

Eine zweite Anordnungsvorrichtung kann dazu eingerichtet sein, eine dritte MEA-Komponente, insbesondere einen Trägerrahmen für eine MEA, auf einem der mehreren MEA-Komponentenabschnitte anzuordnen, während diese Komponentenabschnitte durch das zweite Vakuumtransportband kontinuierlich gefördert werden. Die zweite Anordnungsvorrichtung kann eine Vakuumtrommel umfassen, die dazu eigerichtet ist, Trägerrahmen, insbesondere vereinzelte Trägerrahmen aufzunehmen, mittels Unterdruck zu fixieren, kontinuierlich zu fördern und anschließend auf den MEA-Komponentenabschnitten anzuordnen und/oder aufzuwalzen.

Der Trägerrahmen für die MEA kann optional zwei oder mehr Ausnehmungen aufweisen. Die zweite Anordnungsvorrichtung kann dazu eingerichtet sein, den Trägerrahmen derart auf einem der mehreren MEA-Komponentenabschnitte anzuordnen, dass die MEA-Komponentenabschnitte zumindest eine der Ausnehmungen vollständig überdecken und zumindest eine weitere der Ausnehmungen zumindest teilweise unbedeckt lassen.

Die dritte MEA-Komponente, welche insbesondere ein Trägerrahmen sein kann, kann zumindest in einer Längs- oder Förderrichtung eine größere räumliche Ausdehnung aufweisen als die MEA-Komponentenabschnitte. Mit anderen Worten kann die Dritte MEA-Komponente größer sein, als die durch das zweite Vakuumtransportband geförderten MEA-Komponentenabschnitte, auf denen die dritte MEA-Komponente durch die zweite Anordnungsvorrichtung angeordnet wird.

Die zweite Anordnungsvorrichtung kann insbesondere dazu eingerichtet sein, den Trägerrahmen derart auf einem der mehreren MEA-Komponentenabschnitte anzuordnen, dass der Trägerrahmen die MEA-Komponentenabschnitte in einer Richtung parallel zur Förderrichtung des zweiten Vakuumtransportbands überragt. Mit anderen Worten kann der auf den MEA-Komponentenabschnitten angeordnete Trägerrahmen in der Förderrichtung und/oder entgegen der Förderrichtung überstehen.

Ein Vorteil hierbei ist, dass die erste MEA-Komponente nicht zwingend die Komponente mit der größten Längsausdehnung oder die längste/größte Komponente sein muss. Die Vorrichtung ermöglicht es aufgrund der Abstandsvariation zwischen den Komponentenabschnitten eine dritte MEA-Komponente auf den MEA-Komponentenabschnitten anzuordnen, die eine größere Fläche hat und/oder länger ist, als die Komponentenabschnitte, die zuvor durch ein Zerschneiden zumindest der ersten MEA-Komponente hergestellt wurden.

Ferner kann die Vorrichtung zur Herstellung einer Membran-Elektroden-Anordnung eine dritte Anordnungsvorrichtung aufweisen, die dazu eingerichtet ist, eine vierte MEA-Komponente, zum Beispiel eine GDL, insbesondere eine Anode oder eine Katode in Form einer GDL, auf einem der mehreren MEA-Komponentenabschnitte und/oder auf der dritten MEA-Komponente anzuordnen, während diese durch das zweite Vakuumtransportband kontinuierlich gefördert wird/werden.

Optional kann die zur Herstellung einer Membran-Elektroden-Anordnung weiter eine oder mehrere Laminationsvorrichtungen und/oder Erwärmungsvorrichtungen umfassen, die jeweils dazu eingerichtet sind, die MEA-Komponenten mit einem stoffschlüssigen thermischen Fügeverfahren und/oder mit einem Kaltlaminationsverfahren miteinander zu verbinden. Auch eine, insbesondere separate, Anpressvorrichtung, die dazu ausgebildet und angeordnet ist, die verschiedenen MEA-Komponenten jeweils aneinander oder aufeinander zu pressen, kann vorgesehen sein.

Ferner kann die Vorrichtung eine oder mehrere Klebstoffapplikationsvorrichtungen umfassen, die dazu eigerichtet sind, einen Klebstoff auf die durch die Vakuumtransportbänder geförderten MEA-Komponenten oder MEA Komponentenabschnitte zu applizieren. Alternativ oder ergänzend kann ein Klebstoff durch eine oder mehrere Klebstoffapplikationsvorrichtungen auch auf der zweiten, dritten und/oder vierten MEA-Komponente angeordnet werden, insbesondere bevor diese jeweils auf der ersten MEA-Komponente und/oder den MEA-Komponentenabschnitten und/oder den Trägerrahmen angeordnet werden.

Optional kann eine Inspektionsvorrichtung dazu angeordnet und ausgebildet sein, einen Eigenschaftsfehler und/oder einen Anordnungsfehler der geförderten MEA-Komponenten und/oder MEA-Komponentenabschnitte festzustellen. Im Falle einer Feststellung eines Eigenschaftsfehlers und/oder eines Anordnungsfehlers kann eine MEA-Komponente oder ein MEA-Komponentenabschnitt von der weiteren Fertigung ausgeschlossen werden, zum Beispiel durch die Förderung der fehlerhaften MEA-Komponenten und/oder MEA-Komponentenabschnitte in eine Ausschussaufnahme oder Ablageeinrichtung.

Ein Verfahren zur Herstellung einer Membran-Elektroden-Anordnung, MEA, umfasst zumindest die Schritte:
- Kontinuierliches Fördern, mit einem ersten Vakuumtransportband, einer ersten MEA-Komponente in Form eines Bahnmaterials mit einer ersten Fördergeschwindigkeit;
- Zumindest teilweises Anordnen, mit einer ersten Anordnungsvorrichtung, einer zweiten MEA-Komponente auf der ersten MEA-Komponente, während die erste MEA-Komponente kontinuierlich durch das erste Vakuumtransportband gefördert wird;
- Schneiden, mit einer ersten Schneidvorrichtung, der als Bahnmaterial bereitgestellten ersten MEA-Komponente mit der darauf zumindest teilweise angeordneten zweiten MEA-Komponente in mehrere MEA-Komponentenabschnitte, sodass die MEA-Komponentenabschnitte jeweils zumindest einen Teil der ersten und der zweiten MEA-Komponente umfassen; und
- Kontinuierliches Fördern, mit einem zweiten Vakuumtransportband, der mehreren MEA-Komponentenabschnitte mit einer zweiten Fördergeschwindigkeit; wobei die zweite Fördergeschwindigkeit höher/größer ist als die erste Fördergeschwindigkeit.

### Kurzbeschreibunq der Figuren

Weitere Merkmale, Eigenschaften, Vorteile und mögliche Abwandlungen werden für einen Fachmann anhand der nachstehenden Beschreibung deutlich, in der auf die beigefügten Zeichnungen Bezug genommen ist. Dabei zeigen die Figuren jeweils schematisch Beispiele für eine Membran-Elektroden-Anordnung und eine Fertigungsvorrichtung für eine Membran-Elektroden-Anordnung.
- Fig. 1: zeigt ein Beispiel für einen Trägerrahmen und für eine Membran-Elektroden-Anordnung, MEA.
- Fig. 2: zeigt ein Beispiel für einen Trägerrahmen mit einem darauf angeordneten Klebstoff.
- Fig. 3: zeigt ein Beispiel für die Anordnung einer Komponente für eine Membran-Elektroden-Anordnung auf einem fortlaufenden Bahnmaterial.
- Fig. 4: zeigt ein weiteres Beispiel für die Anordnung einer Komponente für eine Membran-Elektroden-Anordnung auf einem fortlaufenden Bahnmaterial.
- Fig. 5: zeigt ein Beispiel für eine Vorrichtung zur Herstellung einer Membran-Elektroden-Anordnung.
- Fig. 6: zeigt ein weiteres Beispiel für die Anordnung einer Komponente für eine Membran-Elektroden-Anordnung auf einem fortlaufenden Bahnmaterial.
- Fig. 7: zeigt ein weiteres Beispiel für eine Vorrichtung zur Herstellung einer Membran-Elektroden-Anordnung.
- Fig. 8: zeigt ein weiteres Beispiel für die Anordnung einer Komponente für eine Membran-Elektroden-Anordnung auf einem fortlaufenden Bahnmaterial sowie ein Beispiel für die Anordnung einer Komponente für eine Membran-Elektroden-Anordnung auf einem vereinzelten Komponentenabschnitt eines Bahnmaterials.
- Fig. 9: zeigt ein weiteres Beispiel für eine Vorrichtung zur Herstellung einer Membran-Elektroden-Anordnung.
- Fig. 10: zeigt ein weiteres Beispiel für eine Vorrichtung zur Herstellung einer Membran-Elektroden-Anordnung.

### Detaillierte Beschreibung der Figuren

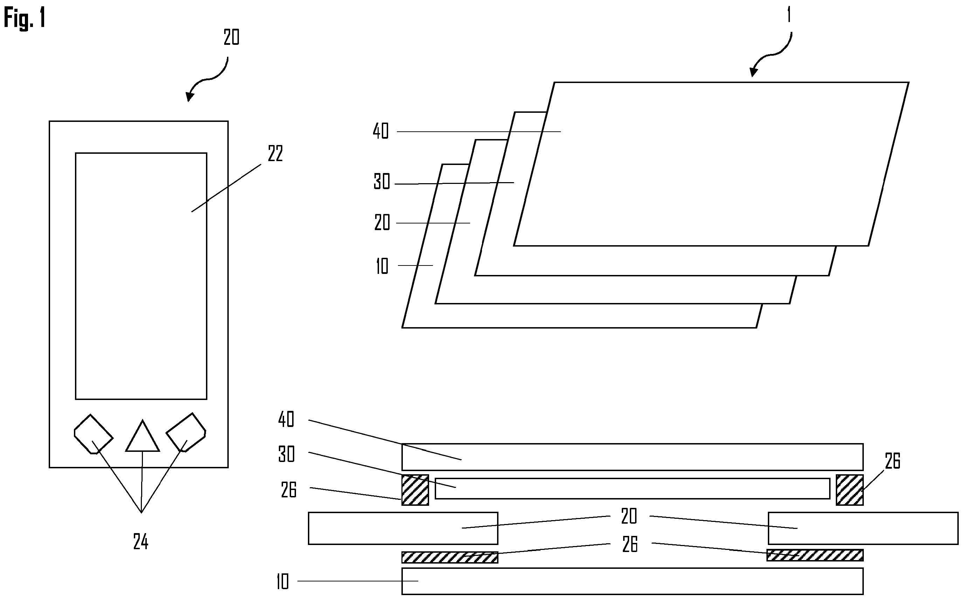

Sofern nicht explizit anders angegeben, sind übereinstimmende oder in ihrer Funktion vergleichbare Komponenten und Bestandteile in den schematischen Figuren 1 bis 9 mit übereinstimmenden Bezugszeichen versehen.

Figur 1 zeigt einen Trägerrahmen 20 für eine Membran-Elektroden-Anordnung 1. Der Trägerrahmen 20 weist eine erste Ausnehmung 22 und mehrere weitere Ausnehmungen 24 auf. Im gezeigten Beispiel ist der Trägerrahmen 20 bereits von einem mehrere Trägerrahmen umfassenden Bahnmaterial, nämlich einer Trägerbahn, separiert. Dieses ist zur Fertigung einer Membran-Elektroden-Anordnung; MEA, jedoch nicht zwingend notwendig. Vielmehr können alternativ auch mehrere Membran-Elektroden-Anordnungen auf einem fortlaufenden Träger-Bahnmaterial mit mehreren Trägerrahmen gefertigt werden und anschließend voneinander separiert werden. Voneinander separierte Abschnitte einer ursprünglich als quasi-unendliches Bahnmaterial bereitgestellten Komponente für eine Membran-Elektroden-Anordnung sind Komponentenabschnitte.

Ferner zeigt die Figur 1 schematisch den Aufbau einer zu fertigenden Membran-Elektroden-Anordnung 1. Die Membran-Elektroden-Anordnung 1 umfasst den Trägerrahmen 20 mit der ersten Ausnehmung 22. Die erste Ausnehmung 22 ist hierbei von einem Klebstoffauftrag 26 umformt, der auf den Trägerrahmen 20 aufgetragen ist. Auf dem Trägerrahmen 20 mit dem Klebstoffauftrag 26 sind eine katalysatorbeschichtete Membran 30 sowie eine Gasdiffusionsschicht, GDL, 40 angeordnet. Im gezeigten Beispiel ist die Gasdiffusionsschicht 40 eine Katode einer Membran-Elektroden-Anordnung 1. Auf der der Katode 40 abgewandten Oberfläche des Trägerrahmens 20 sind ein weiterer Klebstoffauftrag 26 sowie eine weitere GDL 10, hier eine Anode, angeordnet. Die Katode 40 und die Anode 10 sind im gezeigten Beispiel jeweils als Schichtelektrode ausgebildet. In anderen, nicht gezeigten Ausführungsbeispielen, kann die GDL 40 eine Anode ausbilden und die GDL 10 kann eine Kathode ausbilden. Mit anderen Worten können die Anode und die Kathode der gezeigten Anordnung ohne weitere strukturelle Änderung der Membran-Elektroden-Anordnung 1 miteinander vertauscht werden.

Im Folgenden werden die in den Figuren gezeigten Ausführungsbeispiele daher mit einer Anordnung aus Kathode 40 und Anode 10 beschrieben, wobei klar ist, dass es sich bei der Kathode 40 und der Anode 10 jeweils um eine GDL handelt und dass Anode und Kathode als zueinander korrespondierende Elemente jeweils miteinander ausgetauscht werden können, ohne die Struktur der in den Figuren gezeigten Vorrichtungen über das Austauschen von Kathode und Anode hinaus zu verändern.

Wie in der Figur 1 gezeigt, kann die katalysatorbeschichtete Membran 30 auf einer Oberfläche der Katode 40 angeordnet sein, wobei sowohl die Katode 40 als auch die Membran 30 auf dem Trägerrahmen 20 mit dem darauf aufgetragenen Klebstoffauftrag 26 angeordnet sind. Optional kann hierbei sowohl zumindest ein Teil der Membran 30 als auch ein Teil der Katode 40 unmittelbar auf dem Klebstoffauftrag 26 angeordnet sein. Die Membran 30 kann durch die Anordnung der Katode 40 auf dem Klebstoffauftrag zumindest teilweise durch die Katode 40 und den Trägerrahmen 20 und/oder durch den Klebstoffauftrag 26 umschlossen werden.

In einer nicht gezeigten Alternative ist die Membran 30 flächig größer als die erste Ausnehmung 22, aber flächig kleiner als die auf der Membran angeordnete GDL. Optional kann der auf den Trägerrahmen 20 aufgetragene Klebstoffauftrag 26 hierbei so groß sein, dass sowohl die Membran 30 als auch die auf der Membran angeordnete GDL durch den Klebstoff an dem Trägerrahmen fixiert/befestigt sind. Der Klebstoffauftrag 26, welcher zur Verbindung der Membran 30 und des Trägerrahmen 20 vorgesehen sein kann, kann hierbei die auf dem Trägerrahmen 20 angeordnete Membran 30, insbesondere seitlich, überragen.

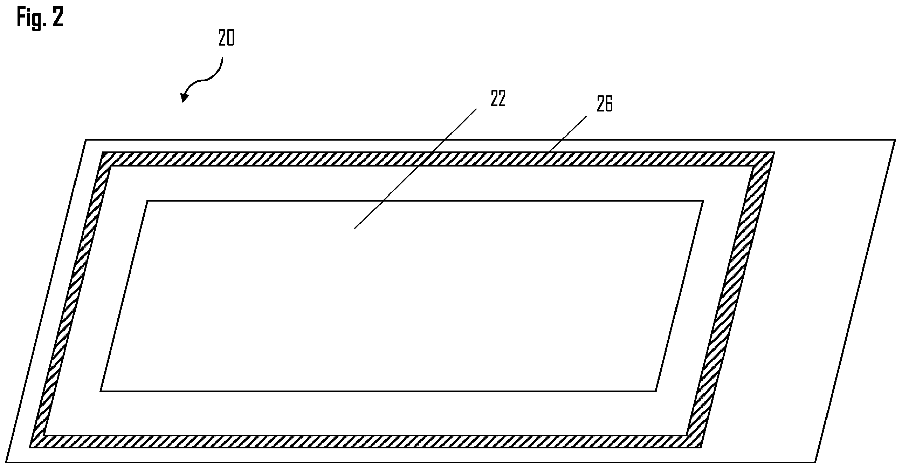

Die Figur 2 zeigt ein Beispiel für einen Trägerrahmen 20 mit einer ersten Ausnehmung 22 und einem auf den Trägerrahmen 20 aufgetragenen Klebstoffauftrag 26, der die erste Ausnehmung 22 vollständig umformt, in einer schematisch-perspektivischen Ansicht. Optional kann der gezeigte Trägerrahmen auch weitere Ausnehmungen aufweisen, die in der Figur 2 aus Übersichtsgründen jedoch nicht gezeigt sind. Der Klebstoffauftrag 26 ist zur Fixierung einer Membran oder Elektrode/GDL auf dem Trägerrahmen geeignet. Im gezeigten Beispiel ist der Klebstoff auf dem Trägerahmen 20 aufgetragen. Alternativ kann der Klebstoff aber auch auf eine Anode/GDL, Katode/GDL oder Membran aufgetragen werden, und zur Fixierung einer jeweils weiteren Komponente, zum Beispiel zur Fixierung eines Trägerrahmens, dienen. Die gezeigte erste Ausnehmung 22 des Trägerrahmens 20 kann ebenso wie beliebige weitere (nicht gezeigte) Ausnehmungen des Trägerrahmens 20 zum Beispiel mit einem Stanzverfahren oder mit einem Fräsverfahren hergestellt werden.

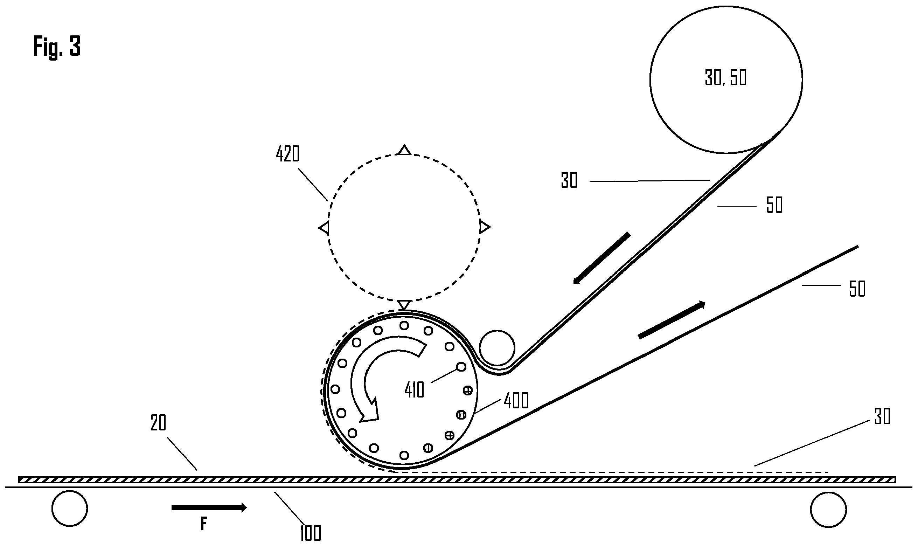

Figur 3 zeigt ein Beispiel für die Anordnung einer Komponente für eine Membran-Elektroden-Anordnung auf einem fortlaufenden Bahnmaterial. Eine erste MEA-Komponente, im gezeigten Beispiel eine Membran 30, wird von einer Rolle als quasi-unendliches Bahnmaterial bereitgestellt. Die Membran 30 ist hierbei auf einer Stützbahn 50 angeordnet und wird gemeinsam mit dieser Stützbahn 50 von der Rolle bereitgestellt. Die Membran 30 und die Stützbahn 50 sind gemeinsam auf der schematisch gezeigten Rolle aufgerollt.

Weiter zeigt die Figur 3, dass eine Trägerbahn, die mehrere, im gezeigten Beispiel noch nicht voneinander getrennte, Trägerrahmen 20 umfasst, durch ein Vakuumtransportband 100 in der Förderrichtung F gefördert wird. Die Förderrichtung F ist die Richtung, in der das Vakuumtransportband die Trägerbahn mit den Trägerrahmen 20 bewegt.

Die auf der Stützbahn 50 angeordnete Membran 30 wird zur Vakuumtrommel 400 gefördert und von dieser mittels Unterdruck fixiert und, durch eine Drehung der Vakuumtrommel 400, kontinuierlich weitergefördert. Die Stützbahn 50 ist aus einem im Vergleich zur Membran 30 zugfesteren Material und weist eine größere Dicke auf. Die Stützbahn 50 nimmt zumindest im Wesentlichen die durch das Fördern mit der Vakuumtrommel und das Abrollen von der Rolle entstehenden und auf die Bahnmaterialien wirkenden Zugkräfte, insbesondere die Zugkräfte in der Förderrichtung der Membran 30 und der Stützbahn 50, auf.

Zudem ist die als Bahnmaterial bereitgestellte Stützbahn 50 im gezeigten Beispiel breiter als die als Bahnmaterial bereitgestellte Membran 30. Mit anderen Worten überragt die Stützbahn 50 die Membran 30 in einer Richtung quer zur in der Figur 3 gezeigten Förderrichtung der Membran 30 und der Stützbahn 50 beidseitig. Dieses ist jedoch nicht in allen Ausführungsformen notwendig.

Die Vakuumtrommel 400 weist mehrere Öffnungen 410 auf. Die Öffnungen 410 befinden sich in der Mantelfläche der Vakuumtrommel 400 und sind in den Figuren aus Übersichtsgründen lediglich schematisch gezeigt. Die Vakuumtrommel 400 ist dazu eingerichtet, einen Unterdruck zu erzeugen und die Stützbahn 50 mit der darauf angeordneten Membran 30 an ihrer Mantelfläche zu fixieren und schlupffrei zu fördern. Der erzeugte Unterdruck kann hierbei selektiv für jede der Öffnungen 410 aktiviert oder deaktiviert werden. Mit anderen Worten kann für jede einzelne Öffnung 410 ein durch die Vakuumtrommel 400 erzeugter Unterdruck angelegt und anschließend wieder neutralisiert oder aufgehoben werden, wobei das Anlegen und Aufheben des Unterdrucks für jede der Öffnungen 410 unabhängig von den jeweils weiteren Öffnungen geschehen kann. Optional können die Öffnungen 410 hierzu selektiv verschlossen oder geöffnet werden, dieses ist jedoch nicht bei allen Ausführungsformen notwendig.

Die Stützbahn 50 ist luftdurchlässig, sodass auch die auf der Stützbahn 50 angeordnete Membran 30 durch den durch die Vakuumtrommel 400 erzeugten Unterdruck angesaugt oder fixiert wird. Somit wird sowohl die Membran 30 als auch die zwischen angesaugter Membran 30 und der Mantelfläche der Vakuumtrommel angeordnete Stützbahn 50 durch die Vakuumtrommel 400 fixiert und kontinuierlich schlupffrei gefördert.

Durch eine Drehung um eine Rotationsachse fördert die Vakuumtrommel 400 die auf der Stützbahn 50 angeordnete Membran 30 zu einem Schneidzylinder 420, der dazu eingerichtet ist, die Membran 30 in mehrere einzelne Komponentenabschnitte, im gezeigten Beispiel in mehrere Membranabschnitte, zu zerschneiden ohne hierbei die Stützbahn 50 zu zerschneiden. Dieses ist jedoch nicht in allen Ausführungsformen notwendig, die Membran 30 kann alternativ auch unzerschnitten weiterbefördert werden. Im gezeigten Beispiel wird die zerschnittene Membran 30, oder mit anderen Worten die so hergestellten Membranabschnitte, durch die Vakuumtrommel 400 kontinuierlich weiterbefördert, ohne dass das Zerschneiden mit dem Schneidzylinder die Positionierung der Membran oder Membranabschnitte auf der Stützbahn verändert. Die Membranabschnitte können so mit hoher Geschwindigkeit und Genauigkeit gefertigt werden, wobei die Stützbahn 50 hier die Oberfläche der Vakuumtrommel 400 vor einem unmittelbaren Kontakt mit den Klingen oder Schneidwerkzeugen des Schneidzylinders 420 schützt.

Weiter ist die Vakuumtrommel 400 in dem in der Figur 3 gezeigten Beispiel dazu eingerichtet, die zerschnittene Membran 30 oder die Membranabschnitte zu einer Übergabeposition zu fördern und die Membranabschnitte an dieser Übergabeposition auf den Trägerrahmen 20 anzuordnen. Im gezeigten Beispiel wird je ein Membranabschnitt auf einem der noch nicht voneinander getrennten Trägerrahmen 20 angeordnet. In anderen Ausführungsformen können jedoch auch mehrere MEA-Komponentenabschnitte auf jeweils einem Trägerrahmen angeordnet werden.

Im gezeigten Beispiel ist die Vakuumtrommel 400 dazu eingerichtet, jeweils einen der Membranabschnitte so auf jeweils einem der Trägerrahmen 20 anzuordnen, dass jeweils eine erste Ausnehmung 22 des jeweiligen Trägerrahmens 20 der Trägerbahn überdeckt/abgedeckt wird. Die Membranabschnitte sind hierzu jeweils flächig größer als die jeweilige erste Ausnehmung 22 in den Trägerrahmen 22.

Die Vakuumtrommel 400 ist im gezeigten Beispiel dazu angeordnet und ausgebildet, die zerschnittene Membran 30 oder die Membranabschnitte an die Trägerrahmen 20 anzupressen und gleichzeitig den Unterdruck, mit dem die Membranabschnitte an der Mantelfläche der Vakuumtrommel 400 fixiert werden, aufzuheben. Durch das Neutralisieren des Unterdrucks für die an der Übergabeposition positionierten Membranabschnitte werden diese freigegeben und verbleiben auf den Trägerrahmen 20. In einer nicht gezeigten Alternative kann ein Unterdruck, der durch das Vakuumtransportband 100 auf die Membran 30 oder die Membranabschnitte ausgeübt wird, auch größer sein als der Unterdruck, der durch die Vakuumtrommel 400 auf die Membran 30 oder die Membranabschnitte ausgeübt wird, sodass die Membran 30 oder die Membranabschnitte auf den Trägerrahmen 20, welche insbesondere Ausnehmungen aufweisen, verbleiben.

Die Membranabschnitte werden anschließend gemeinsam mit den Trägerrahmen 20 in der Förderrichtung F durch das Vakuumtransportband 100 ab- oder weitertransportiert. Optional kann zuvor ein Klebstoff (nicht gezeigt) auf den jeweiligen Trägerrahmen 20 angeordnet worden sein, welcher ein Anhaften der Membranabschnitte auf den Trägerrahmen 20 bewirkt oder zumindest verbessert. Der Klebstoff kann insbesondere ein unter UV-Licht aushärtender Klebstoff sein und eine oder mehrere Ausnehmungen in dem Trägerrahmen rahmenartig umgeben oder umformen.

Im in der Figur 3 gezeigten Beispiel werden die Öffnungen 410 in der Mantelfläche der Vakuumtrommel 400 bei einem Aufheben oder Neutralisieren des Unterdrucks verschlossen. Für ein erneutes Fixieren der kontinuierlich zugeführten Stützbahn 50 und der Membran 30 können die jeweiligen Öffnungen 410 nach einer Drehung der Vakuumtrommel 400 um einen bestimmten Winkel wieder geöffnet und/oder aktiviert werden. Beides ist jedoch ausdrücklich nicht in allen Ausführungsformen notwendig. Weiter kann die in der Figur 3 gezeigte Vakuumtrommel eine haftungsreduzierende Beschichtung auf ihrer Mantelfläche/Oberfläche aufweisen, zum Beispiel eine Teflon-Beschichtung. In anderen Ausführungsformen kann die Vakuumtrommel auch eine Gummi- oder Kunststoffbeschichtung auf ihrer Mantelfläche/Oberfläche aufweisen und/oder zumindest teilweise aus einem Gummi- oder Kunststoffmaterial gefertigt sein.

Nachdem die zerschnittene Membran 30 oder die Membranabschnitte auf den Trägerrahmen 20 angeordnet wurden und der Unterdruck, mit dem die Stützbahn 50 und die Membranabschnitte auf der Mantelfläche der Vakuumtrommel fixiert wurden aufgehoben wurde, wird die Stützbahn, wie in der Figur 3 gezeigt, getrennt von den Membranabschnitten ab- oder weitertransportiert. Mit anderen Worten wird die Stützbahn 50 nach der Anordnung der Membranabschnitte auf den Trägerrahmen 20 ohne die Membranabschnitte weitergefördert.

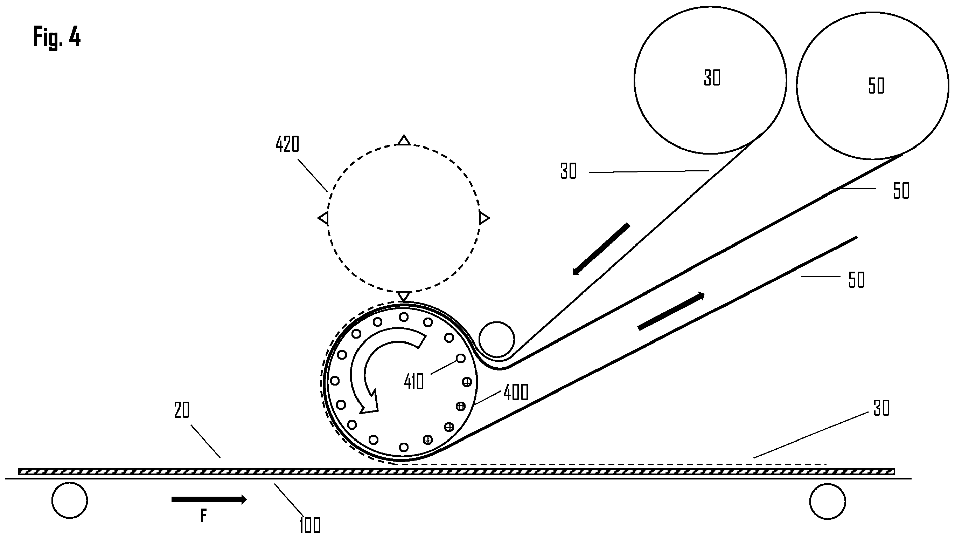

Die Figur 4 zeigt ein alternatives Realisierungsbeispiel mit einer Membranbereitstellungsrolle und einer separaten Stützbahnbereitstellungsrolle. Bei dem in der Figur 4 gezeigten Beispiel wird die Membran 30 von einer separaten Membranbereitstellungsrolle bereitgestellt und die Stützbahn 50 wird von einer separaten Stützbahnbereitstellungsrolle bereitgestellt. Die Membran 30 und die Stützbahn 50 werden jeweils zur Vakuumtrommel 400 gefördert, wobei die Membran 30 zuvor auf der Stützbahn 50 angeordnet wird. Genauer wird die Membran 30 so auf der luftdurchlässigen Stützbahn 50 angeordnet, dass die Stützbahn 50 zwischen der Mantelfläche der Vakuumtrommel 400 mit den Öffnungen 410 und der Membran 30 angeordnet ist. Die Membran 30 wird/ist so auf einer der Mantelfläche der Vakuumtrommel 400 abgewandten Oberfläche der Stützbahn 50 angeordnet.

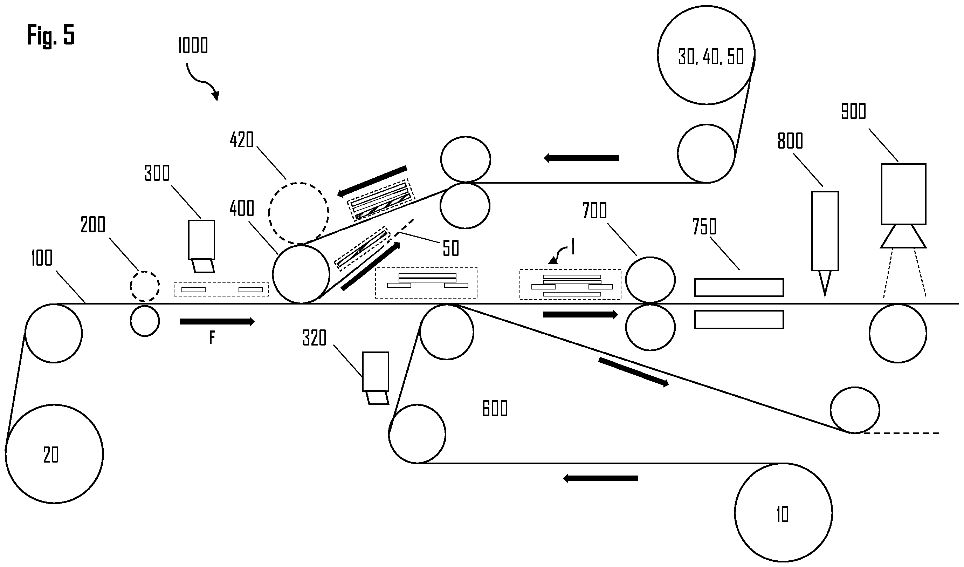

Die Figur 5 zeigt ein Beispiel für eine Vorrichtung 1000 zur Fertigung von Membran-Elektroden-Anordnungen 1.

Im gezeigten Beispiel werden mehrere Trägerrahmen 20 als fortlaufendes quasi-unendliches Rollenmaterial bereitgestellt und durch eine Fördervorrichtung 100 kontinuierlich in der Förderrichtung F an verschiedenen Fertigungsstationen vorbei gefördert. Die Fertigungsstationen nehmen hierbei jeweils Verarbeitungsschritte zur Herstellung einer Membran-Elektroden-Anordnung vor und/oder stellen Fertigungskomponenten für diese bereit.

In einem ersten beispielhaften Bearbeitungsschritt bringt eine Fräs- oder Stanzvorrichtung 200 die erste Ausnehmung 22 sowie die weiteren Ausnehmungen 24 in die jeweiligen Trägerrahmen 20 der Trägerbahn ein. Während des Einbringens der ersten Ausnehmung 22 und/oder der weiteren Ausnehmungen 24 kann der Trägerrahmen 20 weiter kontinuierlich in der Förderrichtung F gefördert werden. Je nach Ausführungsform können die erste Ausnehmungen 22 sowie die weiteren Ausnehmungen 24 von derselben oder von unterschiedlichen Vorrichtungen in den Trägerrahmen eingebracht werden. In alternativen Ausführungsformen der Fertigungsvorrichtung 1000 können die Trägerrahmen 20 auch mit bereits eingebrachten Ausnehmungen 22, 24 bereitgestellt werden, sodass auf die Fräs- oder Stanzvorrichtung 200 zur Herstellung von Membran-Elektroden-Anordnungen auch verzichtet werden kann.

Anschließend wird im gezeigten Beispiel ein Klebstoffauftrag 26 auf den Trägerrahmen 20 aufgetragen, welcher die erste Ausnehmung 22 des Trägerrahmens 20 umformt. Hierzu umfasst die Vorrichtung 1000 die Applikationsvorrichtung 300. Die kontinuierliche Förderung der Trägerrahmen 20 durch die Fördervorrichtung 100 wird während des Auftragens des Klebstoffs 26 nicht unterbrochen. Der Klebstoffauftrag 26 kann insbesondere ein unter UV-Licht aushärtender Klebstoff sein. In einer nicht gezeigten Alternative der Vorrichtung zur Fertigung von Membran-Elektroden-Anordnungen kann diese weiter einen eine UV-Aushärtungsstation aufweisen, die dazu eingerichtet ist, den Klebstoffauftrag mittels UV-Licht zumindest teilweise auszuhärten.

Ferner weist die gezeigte Vorrichtung 1000 eine erste Vakuumtrommel 400 auf, die jeweils eine katalysatorbeschichtete Membran 30 sowie eine Katode 40 in Form einer GDL auf den Trägerrahmen 20 mit dem Klebstoffauftrag 26 anordnet. Die Vakuumtrommel 400 ermöglicht die schlupffreie kontinuierliche Förderung der MEA-Komponenten 30, 40 und ordnet sowohl die Membran 30 als auch die Katode/GDL 40 auf den kontinuierlich geförderten Trägerrahmen 20 an. Dieses wird dadurch ermöglicht, dass die Membran 30 sowie die Katode 40 gemeinsam mit einer Stützbahn 50 bereitgestellt und anschließend durch den Schneidzylinder 420 in mehrere MEA-Komponentenabschnitte zerschnitten werden, während sie durch die Vakuumtrommel 400 fixiert werden. Die Stützbahn 50 wird nach dem Anordnen der MEA-Komponentenabschnitte auf den Trägerrahmen 20 getrennt von diesen weitergefördert.

Mit anderen Worten kann die erste Vakuumtrommel 400 dazu eingerichtet sein, jeweils eine erste Elektrode oder eine erste GDL auf den Trägerrahmen 20 mit dem Klebstoffauftrag 26 anzuordnen, wobei auf einer den Trägerrahmen 20 während des Anordnens zugewandten Oberfläche der Elektroden oder GDL jeweils eine katalysatorbeschichtete Membran 30 angeordnet ist, sodass die Membranabschnitte nach dem Anordnen jeweils zwischen den Trägerrahmen 20 und den Elektroden oder GDL angeordnet sind und/oder in der ersten Ausnehmung 22 der Trägerrahmen 20 angeordnet sind.

Weiter weist die gezeigte Vorrichtung eine weitere Anordnungsvorrichtung 600 auf, die ebenfalls eine Vakuumtrommel umfasst und dazu eingerichtet ist, jeweils eine Anode 10 oder zweite GDL auf einer der Katode 40 oder ersten GDL abgewandten Seite der Trägerrahmen 20 anzuordnen. Hierzu kann zuvor entweder auf die Anode/GDL 10 oder auf die der Katode/GDL 40 abgewandten Seite der Trägerrahmen 20 ein weiterer Klebstoffauftrag angeordnet werden. Im gezeigten Beispiel werden die Anoden/GDL 10 als bereits vereinzelte MEA-Komponenten auf einer Stützbahn bereitgestellt und durch die Applikationsvorrichtung 320 mit einem Klebstoffauftrag versehen. In einer anderen, nicht gezeigten, Ausführungsform kann die zweite GDL als Endlosbahn bereitgestellt und vor dem Übergeben auf/auf die Vakuumtrommel durch Querschneiden in mehrere MEA-Komponentenabschnitte vereinzelt werden.

Ferner weißt die gezeigte Fertigungsvorrichtung 1000 eine Anpressvorrichtung 700 mit zwei unbeheizten Anpressrollen und eine Klebstoffaushärtungsvorrichtung 750 auf. In anderen, nicht gezeigten Ausführungsformen, kann die Klebstoffaushärtungsvorrichtung 750 auch entfallen. Die Anpressvorrichtung 700 ist dazu angeordnet und ausgebildet, die Elektroden oder GDL 10, 40 an die Membran 30 und/oder an den Trägerrahmen 10 anzupressen. Die Klebstoffaushärtungsvorrichtung 750 ist dazu angeordnet und ausgebildet die Membran-Elektroden-Anordnung 1 zu erwärmen und/oder mit UV-Licht zu bestrahlen und hierdurch auszuhärten.

Nach dem Aushärten des Klebstoffauftrags können die einzelnen Trägerrahmen 20 bzw. gefertigten Membran-Elektroden-Anordnungen 1 mit einer Trennvorrichtung 800 voneinander getrennt werden. Das Trennen der Trägerrahmen 20 voneinander muss jedoch nicht an dieser Stelle geschehen. Alternativ können die Membran-Elektroden-Anordnungen auch mit einzelnen Trägerrahmen gefertigt werden, welche bereits vor oder während der Anordnung der Membran 30 und/oder der Elektroden/GDL 10, 40 voneinander getrennt wurden. In einer Ausführungsform kann das Trennen der einzelnen Trägerrahmen 20 bzw. der gefertigten Membran-Elektroden-Anordnungen 1 mit einer Rotationsstanze erfolgen. Durch einen Querschnitt und einen randseitigen Längsschnitt werden die Membran-Elektroden-Anordnungen 1 hierbei aus der Trägerbahn ausgestanzt. Ein verbleibendes Stanzgitter/Ausschussgitter kann anschließend von den getrennten/vereinzelten Membran-Elektroden-Anordnungen 1 abgezogen oder wegbefördert werden.

Weiter zeigt die Figur 5 die Inspektionsvorrichtung 900, die zumindest einen Kamerasensor umfasst und dazu eingerichtet ist, Lage- und/oder Eigenschaftsfehler der gefertigten Membran-Elektroden-Anordnungen 1 auf der Transportvorrichtung 100 zu ermitteln. Abhängig von diesem Ermitteln können die Membran-Elektroden-Anordnungen 1 von der Transportvorrichtung 100 entweder in eine Ausschussaufnahme oder in eine Ablagevorrichtung gefördert werden.

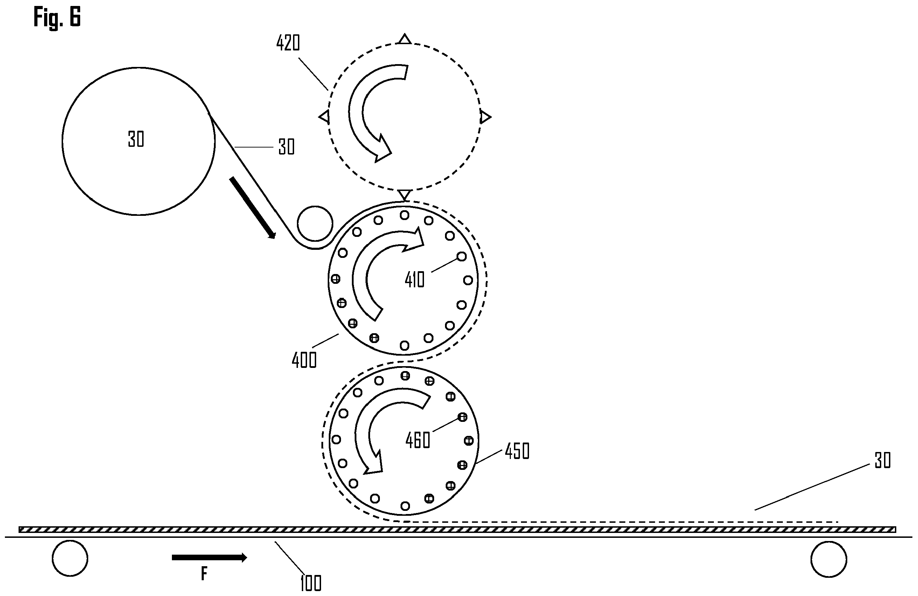

Die Figur 6 zeigt ein weiteres Beispiel für die Anordnung einer Komponente für eine Membran-Elektroden-Anordnung auf einem fortlaufenden Bahnmaterial. Eine erste MEA-Komponente, hier eine Trägerbahn, die mehrere, im gezeigten Beispiel noch nicht voneinander getrennte, Trägerrahmen 20 umfasst, wird durch ein Vakuumtransportband 100 in der Förderrichtung F gefördert. Die Förderrichtung F ist die Richtung, in der das Vakuumtransportband die Trägerbahn mit den Trägerrahmen 20 bewegt. In nicht gezeigten anderen Ausführungsformen kann das fortlaufende Bahnmaterial auch eine GDL und/oder eine Membran sein, auf der/den jeweils weitere MEA-Komponenten angeordnet werden.

Eine zweite MEA-Komponente, im gezeigten Beispiel eine Membran 30 wird von einer Rolle als quasi-unendliches Bahnmaterial bereitgestellt. Die Membran 30 wird, im gezeigten Beispiel zumindest im Wesentlichen spannungsfrei, zur ersten Vakuumtrommel 400 gefördert und von dieser mittels Unterdruck fixiert und, durch eine Drehung der Vakuumtrommel 400, kontinuierlich weitergefördert. Die erste Vakuumtrommel 400 weist hierzu mehrere Öffnungen 410 auf. Die Öffnungen 410 befinden sich in der Mantelfläche der Vakuumtrommel 400 und sind in den Figuren aus Übersichtsgründen lediglich schematisch gezeigt. Die erste Vakuumtrommel 400 ist dazu eingerichtet, einen Unterdruck zu erzeugen um die Membran 30 an ihrer Mantelfläche zu fixieren und schlupffrei zu fördern. Der erzeugte Unterdruck kann hierbei selektiv für jede der Öffnungen 410 aktiviert oder deaktiviert werden. Mit anderen Worten kann für jede einzelne Öffnung 410 ein durch die erste Vakuumtrommel 400 erzeugter Unterdruck angelegt und anschließend wieder neutralisiert oder aufgehoben werden, wobei das Anlegen und Aufheben des Unterdrucks für jede der Öffnungen 410 unabhängig von den jeweils weiteren Öffnungen geschehen kann. Optional können die Öffnungen 410 hierzu selektiv verschlossen oder geöffnet werden, dieses ist jedoch nicht bei allen Ausführungsformen notwendig. In einer weiteren, nicht gezeigten, Ausführungsform kann die Vakuumtrommel 400 eine Zugkraft auf die zuzuführende Membran 30 ausüben um die von der Bereitstellungsrolle abzuwickeln. Die Membran kann insbesondere klemmend zwischen der in der Figur 6 gezeigten Führungsrolle und der Vakuumtrommel 400 zugeführt werden.

Durch eine Drehung um eine Rotationsachse fördert die erste Vakuumtrommel 400 die Membran 30 zu einem Schneidzylinder 420, der dazu eingerichtet ist, die Membran 30 in mehrere einzelne Komponentenabschnitte, im gezeigten Beispiel in mehrere Membranabschnitte, zu zerschneiden. Dieses ist jedoch nicht in allen Ausführungsformen notwendig, die Membran 30 kann alternativ auch unzerschnitten weiterbefördert werden. Im gezeigten Beispiel wird die zerschnittene Membran 30, oder mit anderen Worten die so hergestellten Membranabschnitte, durch die erste Vakuumtrommel kontinuierlich weiterbefördert, ohne dass das Zerschneiden mit dem Schneidzylinder die Positionierung der Membran oder Membranabschnitte verändert. Die Membranabschnitte können so mit hoher Geschwindigkeit und Genauigkeit gefertigt werden. Die in der Figur 6 gezeigte erste Vakuumtrommel 400 weist eine Gummibeschichtung auf ihrer Mantelfläche oder Manteloberfläche auf, die einerseits die Klingen des Schneidzylinders 420 vor einer Beschädigung aufgrund eines unmittelbaren Kontakts mit der Mantelfläche oder Manteloberfläche der ersten Vakuumtrommel 400 schützt und andererseits auch durch einen unmittelbaren Kontakt mit den Klingen des Schneidzylinders 420 nicht beschädigt wird. Alternativ kann die erste Vakuumtrommel auch eine Kunststoffbeschichtung und/oder eine Beschichtung aus einem anderen geeigneten Material aufweisen.

Weiter ist die erste Vakuumtrommel 400 in dem in der Figur 6 gezeigten Beispiel dazu eingerichtet, die zerschnittene Membran 30 oder die Membranabschnitte zu einer Übergabeposition zu fördern und die Membranabschnitte an dieser Übergabeposition auf der Mantelfläche/Oberfläche einer weiteren oder zweiten Vakuumtrommel 450 anzuordnen. Die weitere oder zweite Vakuumtrommel 450 ist zumindest im Wesentlichen funktionsgleich mit der ersten Vakuumtrommel 400, rotiert jedoch in einer zur Drehrichtung der ersten Vakuumtrommel 400 entgegengesetzten Drehrichtung und weist eine haftungsreduzierende Oberflächenbeschichtung, zum Beispiel eine Teflon-Beschichtung, auf.

Die erste Vakuumtrommel 400 ist im gezeigten Beispiel dazu angeordnet und ausgebildet, die zerschnittene Membran 30 oder die Membranabschnitte an die zweite Vakuumtrommel 450 anzupressen und gleichzeitig den Unterdruck, mit dem die Membranabschnitte an der Mantelfläche der ersten Vakuumtrommel 400 fixiert werden, aufzuheben. Durch das Neutralisieren des Unterdrucks für die an der Übergabeposition positionierten Membranabschnitte werden diese freigegeben. Gleichzeitig saugt die zweite Vakuumtrommel 450 die Membranabschnitte mittels eines Unterdrucks durch die Öffnungen 460 in ihrer Mantelfläche an und fixiert diese so an ihrer Mantelfläche oder Oberfläche.

Mittels einer Drehung der zweiten Vakuumtrommel 450 wird/werden die zerschnittene Membran 30 oder die Membranabschnitte zu einer weiteren Übergabeposition befördert und dort auf den Trägerrahmen 20 angeordnet. Die zweite Vakuumtrommel 450 ist im gezeigten Beispiel dazu angeordnet und ausgebildet, die zerschnittene Membran 30 oder die Membranabschnitte an die Trägerrahmen 20 anzupressen und gleichzeitig den Unterdruck, mit dem die Membranabschnitte an der Mantelfläche der zweiten Vakuumtrommel 450 fixiert werden, aufzuheben. Durch das Neutralisieren des Unterdrucks für die an der Übergabeposition positionierten Membranabschnitte werden diese freigegeben und verbleiben auf den Trägerrahmen 20. Die Membranabschnitte werden anschließend gemeinsam mit den Trägerrahmen 20 in der Förderrichtung F durch das Vakuumtransportband 100 ab- oder weitertransportiert. Optional kann zuvor ein Klebstoff auf den jeweiligen Trägerrahmen 20 angeordnet worden sein, welcher ein Anhaften der Membranabschnitte auf den Trägerrahmen 20 bewirkt oder zumindest verbessert.

Im in der Figur 6 gezeigten Beispiel werden die Öffnungen 460 in der Mantelfläche der zweiten Vakuumtrommel 450 bei einem Aufheben oder Neutralisieren des Unterdrucks verschlossen. Für ein Fixieren von jeweils weiteren Membranabschnitten können die jeweiligen Öffnungen 460 nach einer Drehung der zweiten Vakuumtrommel 460 um einen bestimmten Winkel wieder geöffnet und/oder aktiviert werden. Beides ist jedoch ausdrücklich nicht in allen Ausführungsformen notwendig.

Weiter kann die in der Figur 6 gezeigte zweite Vakuumtrommel 450 eine haftungsreduzierende Beschichtung auf ihrer Mantelfläche/Oberfläche aufweisen, zum Beispiel eine Teflon-Beschichtung. Diese erleichtert und verbessert das Anordnen der Membranabschnitte auf den Trägerrahmen 20. Zudem lassen sich mögliche Verunreinigungen der zweiten Vakuumtrommel 450 durch einen Klebstoff, der während des Anordnens der Membranabschnitte auf den Trägerrahmen 20 auf die zweite Vakuumtrommel 450 gelangt, von einer haftungsreduzierenden Beschichtung besonders gut entfernen.

Im gezeigten Beispiel wird je ein Membranabschnitt auf einem der noch nicht voneinander getrennten Trägerrahmen 20 angeordnet. Hierbei kann insbesondere eine jeweils erste Ausnehmung 22 eines jeweiligen Trägerrahmens 20 der Trägerbahn durch die jeweiligen Membranabschnitte überdeckt/abgedeckt werden. Die Membranabschnitte können hierzu größer als die jeweiligen ersten Ausnehmungen 22 sein. Ein Klebstoff kann so auf die jeweiligen Trägerrahmen 20 angeordnet worden sein, dass dieser die ersten Ausnehmungen 22 rahmenartig umgibt/umformt und/oder die jeweils auf den Trägerrahmen angeordneten Membranabschnitte seitlich oder quer zur Förderrichtung der Trägerrahmen 20 überragt. In anderen Ausführungsformen können auch mehrere MEA-Komponentenabschnitte auf jeweils einem Trägerrahmen angeordnet werden.

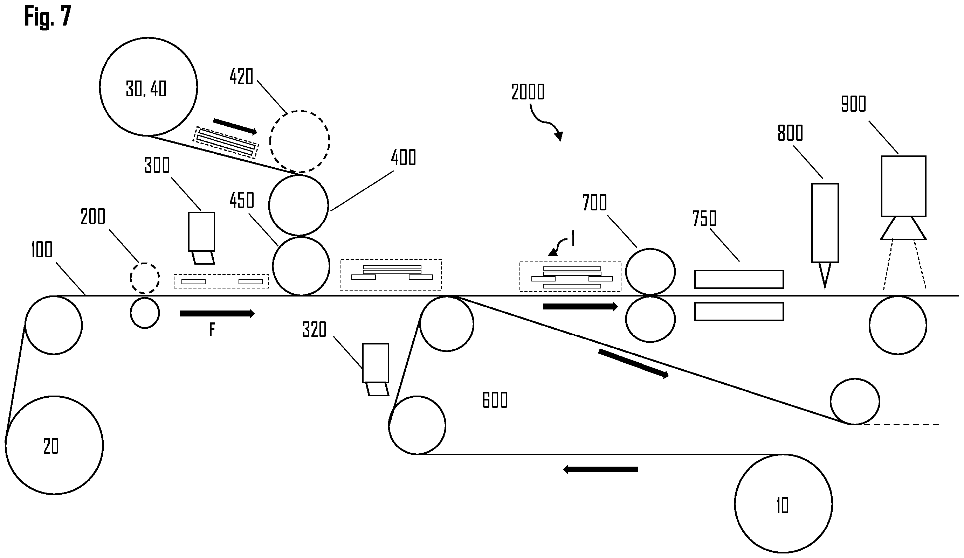

Die Figur 7 zeigt ein weiteres Beispiel für eine Vorrichtung 2000 zur Fertigung von Membran-Elektroden-Anordnungen 1.

Im gezeigten Beispiel werden mehrere Trägerrahmen 20 als fortlaufendes quasi-unendliches Rollenmaterial bereitgestellt und durch eine Fördervorrichtung 100 kontinuierlich in der Förderrichtung F an verschiedenen Fertigungsstationen vorbei gefördert. Die Fertigungsstationen nehmen hierbei jeweils Verarbeitungsschritte zur Herstellung einer Membran-Elektroden-Anordnung vor und/oder stellen Fertigungskomponenten für diese bereit.

In einem ersten beispielhaften Bearbeitungsschritt bringt eine Fräs- oder Stanzvorrichtung 200 die erste Ausnehmung 22 sowie die weiteren Ausnehmungen 24 in den Trägerrahmen 20 ein. Während des Einbringens der ersten Ausnehmung 22 und/oder der weiteren Ausnehmungen 24 kann der Trägerrahmen 20 weiter kontinuierlich in der Förderrichtung F gefördert werden. Je nach Ausführungsform können die erste Ausnehmungen 22 sowie die weiteren Ausnehmungen 24 von derselben oder von unterschiedlichen Vorrichtungen in den Trägerrahmen eingebracht werden. In alternativen Ausführungsformen der Fertigungsvorrichtung 2000 können die Trägerrahmen 20 auch mit bereits eingebrachten Ausnehmungen 22, 24 bereitgestellt werden, sodass auf die Fräs- oder Stanzvorrichtung 200 zur Herstellung von Membran-Elektroden-Anordnungen auch verzichtet werden kann.

Anschließend wird im gezeigten Beispiel ein Klebstoffauftrag 26 auf den Trägerrahmen 20 aufgetragen, welcher die erste Ausnehmung 22 des Trägerrahmens 20 umformt. Hierzu umfasst die Vorrichtung 2000 die Applikationsvorrichtung 300. Die kontinuierliche Förderung der Trägerrahmen 20 durch die Fördervorrichtung 100 wird während des Auftragens des Klebstoffs 26 nicht unterbrochen.

Ferner weist die gezeigte Vorrichtung 2000 eine erste Vakuumtrommel 400 und eine zweite Vakuumtrommel 450 auf, die eine katalysatorbeschichtete Membran 30 sowie eine Katode oder erste GDL 40 auf den Trägerrahmen 20 mit dem Klebstoffauftrag 26 anordnen. Die Vakuumtrommeln 400, 450 ermöglichen jeweils die schlupffreie kontinuierliche Förderung der MEA-Komponenten 30, 40 und ordnen sowohl die Membran 30 als auch die Katode/GDL 40 auf den kontinuierlich geförderten Trägerrahmen 20 an. Dieses wird dadurch ermöglicht, dass die Membran 30 sowie die Katode/GDL 40 gemeinsam bereitgestellt und anschließend durch den Schneidzylinder 420 in mehrere MEA-Komponentenabschnitte zerschnitten werden, während sie durch die erste Vakuumtrommel 400 fixiert werden. Anschließend werden die MEA-Komponentenabschnitte durch die zweite Vakuumtrommel 450 fixiert und von dieser auf den Trägerrahmen 20 angeordnet.

Mit anderen Worten kann beschrieben werden, dass die Vakuumtrommeln 400, 450 dazu eingerichtet sind, jeweils eine erste Elektrode auf den Trägerrahmen 20 mit dem Klebstoffauftrag 26 anzuordnen, wobei auf einer den Trägerrahmen 20 während des Anordnens zugewandten Oberfläche der Elektroden jeweils eine katalysatorbeschichtete Membran 30 angeordnet ist, sodass die Membranabschnitte nach dem Anordnen jeweils zwischen den Trägerrahmen 20 und den Elektroden angeordnet sind und/oder in der ersten Ausnehmung der Trägerrahmen 20 angeordnet sind.

Weiter weist die gezeigte Vorrichtung eine weitere Anordnungsvorrichtung 600 auf, die ebenfalls eine Vakuumtrommel umfasst und dazu eingerichtet ist, jeweils eine Anode/GDL 10 auf einer der Katode/GDL 40 abgewandten Seite der Trägerrahmen 20 anzuordnen. Hierzu kann zuvor entweder auf die Anode/GDL 10 oder auf die der Katode/GDL 40 abgewandte Seite der Trägerrahmen 20 ein weiterer Klebstoffauftrag angeordnet werden. Im gezeigten Beispiel werden die Anoden 10 als bereits vereinzelte MEA-Komponenten auf einer Stützbahn bereitgestellt und durch die Applikationsvorrichtung 320 mit einem Klebstoffauftrag versehen. In einer anderen, nicht gezeigten, Ausführungsform kann die zweite GDL oder Anode 10 als Endlosbahn bereitgestellt und vor dem Übergeben auf/auf die Vakuumtrommel durch Querschneiden in mehrere MEA-Komponentenabschnitte vereinzelt werden.

Ferner weißt die gezeigte Fertigungsvorrichtung 2000 eine Anpressvorrichtung 700 und eine Klebstoffaushärtungsvorrichtung 750 auf. In anderen, nicht gezeigten Ausführungsformen, kann die Klebstoffaushärtungsvorrichtung 750 auch entfallen. Die Anpressvorrichtung 700 ist dazu angeordnet und ausgebildet, die Elektroden 10, 40 an die Membran 30 und/oder an den Trägerrahmen 10 anzupressen. Die Klebstoffaushärtungsvorrichtung 750 ist dazu angeordnet und ausgebildet die Membran-Elektroden-Anordnung 1 zu erwärmen und/oder mit UV-Licht zu bestrahlen und hierdurch auszuhärten.

Nach dem Aushärten des Klebstoffauftrags können die einzelnen Trägerrahmen 20 bzw. gefertigten Membran-Elektroden-Anordnungen 1 mit einer Trennvorrichtung 800 voneinander getrennt werden. Das Trennen der Trägerrahmen 20 voneinander muss jedoch nicht an dieser Stelle geschehen. Alternativ können die Membran-Elektroden-Anordnungen auch mit einzelnen Trägerrahmen gefertigt werden, welche bereits vor oder während der Anordnung der Membran 30 und/oder der Elektroden/GDL 10, 40 voneinander getrennt wurden. In einer Ausführungsform kann das Trennen der einzelnen Trägerrahmen 20 bzw. der gefertigten Membran-Elektroden-Anordnungen 1 mit einer Rotationsstanze erfolgen. Durch einen Querschnitt und einen randseitigen Längsschnitt werden die Membran-Elektroden-Anordnungen 1 hierbei aus der Trägerbahn ausgestanzt. Ein verbleibendes Stanzgitter/Ausschussgitter kann anschließend von den getrennten/vereinzelten Membran-Elektroden-Anordnungen 1 abgezogen oder wegbefördert werden.

Weiter zeigt die Figur 7 die Inspektionsvorrichtung 900, die zumindest einen Kamerasensor umfasst und dazu eingerichtet ist, Lage- und/oder Eigenschaftsfehler der gefertigten Membran-Elektroden-Anordnungen 1 auf der Transportvorrichtung 100 zu ermitteln. Abhängig von diesem Ermitteln können die Membran-Elektroden-Anordnungen 1 von der Transportvorrichtung 100 entweder in eine Ausschussaufnahme oder in eine Ablagevorrichtung gefördert werden.

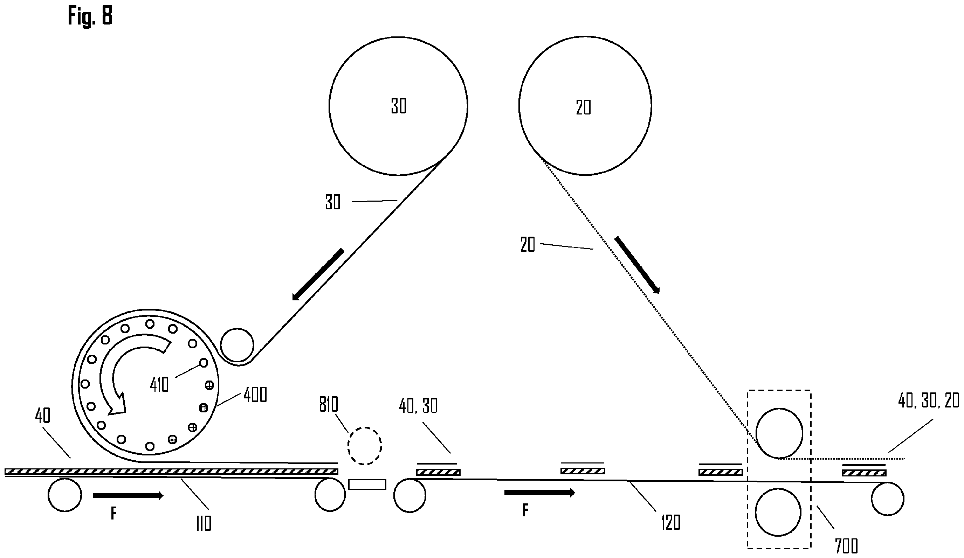

Die Figur 8 zeigt ein weiteres Beispiel für die Anordnung einer Komponente für eine Membran-Elektroden-Anordnung auf einem fortlaufenden Bahnmaterial sowie ein Beispiel für die Anordnung einer Komponente für eine Membran-Elektroden-Anordnung auf einem vereinzelten Komponentenabschnitt eines Bahnmaterials.

Eine erste MEA-Komponente, im gezeigten Beispiel eine Membran 30 wird von einer Rolle als quasi-unendliches Bahnmaterial bereitgestellt. Weiter zeigt die Figur 8, dass eine Elektrode 40 in Form einer Gasdiffusionsschicht, GDL, durch ein erstes Vakuumtransportband 110 in der Förderrichtung F gefördert wird. Die Förderrichtung F ist die Richtung, in der das Vakuumtransportband die GDL oder Elektrode 40 bewegt. Im gezeigten Beispiel ist die Elektrode 40 eine Katode, die als fortlaufendes Bahnmaterial bereitgestellt wird und durch das erste Vakuumtransportband 110 schlupffrei in der Förderrichtung F gefördert wird.

Die Membran 30 wird, im gezeigten Beispiel zumindest im Wesentlichen spannungsfrei, zur ersten Vakuumtrommel 400 gefördert und von dieser mittels Unterdruck fixiert und, durch eine Drehung der ersten Vakuumtrommel 400, kontinuierlich weitergefördert.

Die erste Vakuumtrommel 400 weist mehrere Öffnungen 410 auf. Die Öffnungen 410 befinden sich in der Mantelfläche der Vakuumtrommel 400 und sind in den Figuren aus Übersichtsgründen lediglich schematisch gezeigt. Die erste Vakuumtrommel 400 ist dazu eingerichtet, einen Unterdruck zu erzeugen und die Membran 30 an ihrer Mantelfläche zu fixieren und schlupffrei zu fördern. Der erzeugte Unterdruck kann hierbei selektiv für jede der Öffnungen 410 aktiviert oder deaktiviert werden. Mit anderen Worten kann für jede einzelne Öffnung 410 ein durch die erste Vakuumtrommel 400 erzeugter Unterdruck angelegt und anschließend wieder neutralisiert oder aufgehoben werden, wobei das Anlegen und Aufheben des Unterdrucks für jede der Öffnungen 410 unabhängig von den jeweils weiteren Öffnungen geschehen kann. Optional können die Öffnungen 410 hierzu selektiv verschlossen oder geöffnet werden, dieses ist jedoch nicht bei allen Ausführungsformen notwendig.

Weiter ist die erste Vakuumtrommel 400 in dem in der Figur 8 gezeigten Beispiel dazu eingerichtet, die Membran 30 zu einer Übergabeposition zu fördern und an dieser Übergabeposition auf der GDL anzuordnen. Die erste Vakuumtrommel 400 ist im gezeigten Beispiel weiter dazu angeordnet und ausgebildet, die Membran 30 an die GDL oder Katode 40 anzupressen und gleichzeitig den Unterdruck, mit dem die Membranabschnitte an der Mantelfläche der Vakuumtrommel 400 fixiert werden, aufzuheben. Durch das Neutralisieren des Unterdrucks für die an der Übergabeposition positionierte Membran wird diese freigegeben und verbleibt auf der GDL oder Katode 40. Die Membran wird anschließend gemeinsam mit der GDL oder Katode 40 in der Förderrichtung F durch das erste Vakuumtransportband 110 weitertransportiert. Optional kann zuvor ein Klebstoff auf der GDL oder Katode 40 und/oder auf die Membran angeordnet worden sein, welcher ein Anhaften der Membran an der GDL oder Katode 40 bewirkt oder zumindest verbessert. Zum Beispiel kann der Klebstoff auf die GDL als ein Klebstoffrahmen aufgebracht sein, der einen klebstofffreien Bereich einschließt/umschließt oder umformt. Der Klebstoffrahmen kann dazu dienen, die Membran(abschnitte) im Randbereich mit der GDL zu verkleben.

Im in der Figur 8 gezeigten Beispiel werden die Öffnungen 410 in der Mantelfläche der ersten Vakuumtrommel 400 bei einem Aufheben oder Neutralisieren des Unterdrucks verschlossen. Für ein erneutes Fixieren der kontinuierlich zugeführten Membran 30 können die jeweiligen Öffnungen 410 nach einer Drehung der ersten Vakuumtrommel 400 um einen bestimmten Winkel wieder geöffnet und/oder aktiviert werden. Beides ist jedoch ausdrücklich nicht in allen Ausführungsformen notwendig. In anderen, nicht gezeigten, Ausführungsformen kann zum Beispiel auch ein durch das erste Vakuumtransportband auf Membran und/oder auf einen Teil der Membran ausgeübte Unterdruck größer sein, als ein durch die Vakuumtrommel auf die Membran ausgeübter Unterdruck, sodass das Vakuumtransportband die Membran von der Vakuumtrommel ablösen kann und/oder ein Ablösen der Membran von der Vakuumtrommel zumindest unterstützen kann. Weiter kann die in der Figur 8 gezeigte erste Vakuumtrommel 400 eine haftungsreduzierende Beschichtung auf ihrer Mantelfläche/Oberfläche aufweisen, zum Beispiel eine Teflon-Beschichtung. In anderen Ausführungsformen kann die erste Vakuumtrommel 400 auch eine Gummi- oder Kunststoffbeschichtung auf ihrer Mantelfläche/Oberfläche aufweisen und/oder zumindest teilweise aus einem Gummi- oder Kunststoffmaterial gefertigt sein.

Nach dem Anordnen der zerschnittenen Membran 30 auf der GDL oder Katode 40 werden diese gemeinsam durch das erste Vakuumtransportband weiterbefördert. Im gezeigten Beispiel werden die Membran 30 mit der GDL oder Katode 40 zu einer ersten Schneidvorrichtung 810 gefördert, die dazu eingerichtet ist, die als Bahnmaterial bereitgestellte erste MEA-Komponente, hier die Katode 40 in Form einer GDL, mit der zumindest teilweise darauf angeordneten zweiten MEA-Komponente, hier mit der Membran 30, in mehrere MEA-Komponentenabschnitte, die jeweils zumindest einen Teil der ersten und der zweiten MEA-Komponente umfassen, zu zerschneiden. In anderen Ausführungsformen kann die zweite MEA-Komponente, zum Beispiel eine Membran und/oder eine GDL, auch bereits zerschnitten auf der ersten MEA-Komponente angeordnet werden. Die erste Schneidvorrichtung 810 kann in diesem Fall dazu eingerichtet sein, die erste MEA-Komponente mit der darauf angeordneten zweiten, in diesem Fall bereits in mehrere Abschnitte zerteilte, MEA-Komponente in mehrere MEA-Komponentenabschnitte, die jeweils zumindest einen Teil der ersten und der zweiten MEA-Komponente umfassen, zu zerschneiden.

Die erste Schneidvorrichtung ist im gezeigten Beispiel ein Schneidzylinder 810, der mit einer Schneidauflage, hier einem Schneidtisch/Schneidamboss, zusammenwirkt, über den die MEA-Komponenten zum Zerschneiden geführt werden. Die MEA-Komponenten werden im gezeigten Bespiel von dem ersten Vakuumtransportband 110 auf und über die Schneidauflage gefördert.

Anschließend werden die MEA-Komponentenabschnitte, die jeweils zumindest einen Teil der ersten und der zweiten MEA-Komponente umfassen, von dem ersten Vakuumförderband 110 und/oder der Schneidauflage auf ein zweites Vakuumförderband 120 angeordnet oder transportiert. Das zweite Vakuumtransportband 120 hat zum ersten Vakuumtransportband einen Abstand von etwa 1 cm, sodass die die MEA-Komponentenabschnitte über die Schneidauflage von dem ersten Vakuumtransportband 110 unmittelbar auf das zweite Vakuumtransportband zugeführt werden können. In anderen, nicht gezeigten Ausführungsformen können jedoch auch beliebige andere Abstände zwischen dem ersten und zweiten Vakuumtransportband realisiert werden, wobei diese nicht gezeigten Ausführungsformen alle sonstigen Merkmale der hier gezeigten Ausführungsform aufweisen. In weiteren, nicht gezeigten, Ausführungsformen kann die Vorrichtung auch zum Beispiel auch einen Vakuumgreifer aufweisen, der die MEA-Komponentenabschnitte von dem ersten Vakuumtransportband 110 entnimmt und auf dem zweiten Vakuumtransportband 120 anordnet. Dieses ist jedoch ausdrücklich nicht in allen Ausführungsformen notwendig. Weiter kann das erste Vakuumtransportband optional auch einen Unterdruck, mit dem die MEA-Komponentenabschnitte auf dem ersten Vakuumtransportband fixiert sind, aufheben oder neutralisieren um das Anordnen oder Transportieren der MEA-Komponentenabschnitte von dem ersten Vakuumtransportband 110 zu dem/auf das zweite Vakuumtransportband zu ermöglichen oder zu erleichtern.

Das zweite Vakuumtransportband 120 fördert die MEA-Komponentenabschnitte mit einer höheren Geschwindigkeit als das erste Vakuumtransportband 110. Hierdurch wird ein Abstand zwischen den jeweils geförderten MEA-Komponentenabschnitten vergrößert, sodass auf diesen nun auch solche weiteren Komponenten- oder Komponentenabschnitte angeordnet werden können, die die bisher gefertigten MEA-Komponentenabschnitte in der Förderrichtung F überragen oder die größer sind als die bisher gefertigten MEA-Komponentenabschnitte. Im in der Figur 8 gezeigten Beispiel wird jeweils ein Trägerrahmen 20 auf den durch das zweite Vakuumtransportband 120 geförderten MEA-Komponentenabschnitten angeordnet, wobei der Trägerrahmen 20 die MEA-Komponentenabschnitte jeweils in der Förderrichtung überragt.

Die Trägerrahmen 20 werden als eine fortlaufende, quasi-unendliche Trägerbahn von einer Trägerbahnrolle bereitgestellt. Die fortlaufende Trägerbahn, die mehrere Trägerrahmen 20 umfasst, wird, im gezeigten Beispiel zumindest im Wesentlichen spannungsfrei, zu einer Laminationsvorrichtung 700 geführt, die Trägerbahn mit den Trägerrahmen mit den gefertigten MEA-Komponentenabschnitte verbindet. Die Laminationsvorrichtung 700 ist eine Walzenlaminationsvorrichtung.

Die Laminationsvorrichtung 700 in dem in der Figur 8 gezeigten Beispiel dazu eingerichtet, die Trägerbahn mit den Trägerrahmen 20 zu einer Übergabeposition zu fördern und die Trägerbahn mit den Trägerrahmen 20 an dieser Übergabeposition auf den durch das zweite Vakuumtransportband 120 geförderten MEA-Komponentenabschnitten anzuordnen. Die Laminationsvorrichtung 700 ist im gezeigten Beispiel weiter dazu angeordnet und ausgebildet, die Trägerrahmen 20 an die durch das zweite Vakuumtransportband geförderten MEA-Komponentenabschnitte anzupressen.

Im gezeigten Beispiel werden die Trägerrahmen 20 so auf den durch das zweite Vakuumtransportband 120 geförderten MEA-Komponentenabschnitten angeordnet, dass die MEA-Komponentenabschnitte eine erste Ausnehmung in den jeweiligen Trägerrahmen 20 vollständig überdecken/abdecken und eine zweite Ausnehmung in den jeweiligen Trägerrahmen 20 zumindest teilweise unbedeckt/geöffnet belassen. Anschließend werden die MEA-Komponentenabschnitte mit den darauf angeordneten Trägerrahmen 20 in der Förderrichtung F durch das zweite Vakuumtransportband 120 ab- oder weitertransportiert.

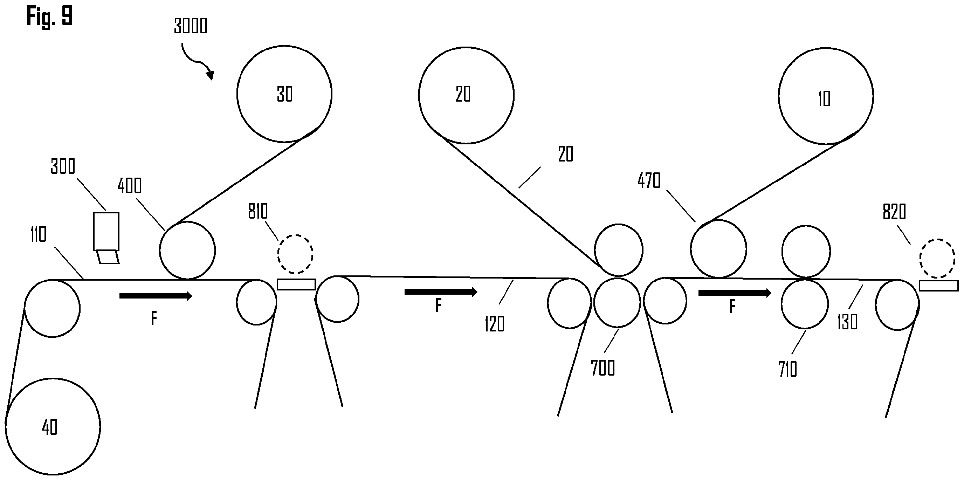

Optional kann zuvor ein Klebstoffauftrag auf die jeweiligen Trägerrahmen 20 und/oder auf die durch das zweite Vakuumtransportband 120 geförderten MEA-Komponentenabschnitte angeordnet worden sein. Der Klebstoffauftrag kann zum Beispiel einen oder mehrere rahmenförmige Abschnitte aufweisen. Diese rahmenförmigen Abschnitte können zum Beispiel eine erste Ausnehmung in den Trägerrahmen umgeben und/oder umformen. Die Figur 9 zeigt ein weiteres Beispiel für eine Vorrichtung 3000 zur Herstellung einer Membran-Elektroden-Anordnung.

Im gezeigten Beispiel wird eine Katode 40 in Form einer GDL als fortlaufendes quasi-unendliches Bahnmaterial bereitgestellt und von dem ersten Vakuumtransportband 110 kontinuierlich in der Förderrichtung F an verschiedenen Fertigungsstationen vorbei gefördert. Die Fertigungsstationen nehmen hierbei jeweils Verarbeitungsschritte zur Herstellung einer Membran-Elektroden-Anordnung vor und/oder stellen Fertigungskomponenten für diese bereit. Andere, nicht gezeigte Ausführungsformen, können auch lediglich eine einzige Fertigungsstation aufweisen.

Im gezeigten Beispiel wird ein Klebstoffauftrag auf die GDL oder Katode 40 aufgetragen, Hierzu umfasst die Vorrichtung 3000 die Applikationsvorrichtung 300. Die kontinuierliche Förderung der GDL oder Katode 40 durch das erste Vakuumtransportband 110 wird während des Auftragens des Klebstoffs 26 nicht unterbrochen.

Weiter weist die gezeigte Vorrichtung 3000 zumindest eine erste Vakuumtrommel 400 auf, die, wie zur Figur 8 beschrieben, eine Membran 30 auf der GDL oder Katode 40 anordnet. Um einen Abstand von mit einer ersten Schneidvorrichtung 810 gefertigten MEA-Komponentenabschnitten zueinander zu vergrößern, werden die MEA-Komponentenabschnitte von dem ersten Vakuumtransportband 110 auf das zweite Vakuumtransportband 120 gefördert oder übergeben, wobei das zweite Vakuumtransportband 120 eine höhere Fördergeschwindigkeit aufweist als das erste Vakuumtransportband 110. Hierdurch wird es ermöglicht, dass eine Laminationsvorrichtung 700 auch solche Komponenten oder Komponentenabschnitte, hier die Trägerbahn mit den Trägerrahmen 20, auf den MEA-Komponentenabschnitten anordnen kann, die diese in der Förderrichtung F des zweiten Vakuumtransportbandes 120 überragen. Die Förderrichtung F des zweiten Vakuumtransportbandes kann insbesondere dieselbe Richtung sein, in der das erste Vakuumtransportband 110 die MEA-Komponenten oder MEA-Komponentenabschnitte fördert.

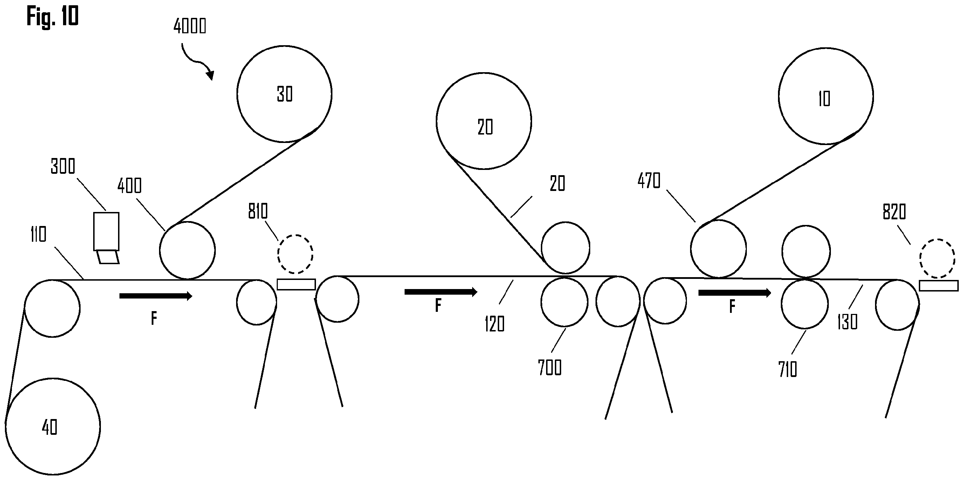

Die Laminationsvorrichtung 700 kann entweder, wie in der Figur 9 gezeigt, zwischen dem zweiten Vakuumtransportband 120 und einem zusätzlichen Vakuumtransportband 130 angeordnet sein oder, wie in der Figur 10 als Alternative Vorrichtung 4000 gezeigt, dazu angeordnet und ausgebildet sein, die Trägerbahn mit den Trägerrahmen 20 auf die von dem zweiten Vakuumtransportband 120 geförderten MEA-Komponentenabschnitte anzuordnen. In beiden in den Figuren 9 und 10 gezeigten Beispielen ist die Laminationsvorrichtung 700 eine Walzenlaminationsvorrichtung, die dazu angeordnet und ausgebildet ist, die MEA-Komponentenabschnitte an die Trägerrahmen 20 anzupressen und die MEA-Komponentenabschnitte mit den Trägerrahmen zu verbinden.

Ferner weist die gezeigte Vorrichtung 3000 das zusätzliche Vakuumtransportband 130 auf, welches die Trägerbahn mit den MEA-Komponentenabschnitten aufnimmt oder von der Lamminationsvorrichtung und/oder dem zweiten Vakuumtransportband übernimmt. Eine zusätzliche Vakuumtrommel 470 ist dazu angeordnet und ausgebildet, jeweils eine Anode oder GDL 10 auf der der Katode 40 abgewandten Oberfläche der jeweiligen Trägerrahmen 20 anzuordnen. Die GDL oder Anode 10 wird als fortlaufendes quasi-unendliches Bahnmaterial von einer Rolle bereitgestellt, zu der zusätzlichen Vakuumtrommel 470 geführt und an einer Mantelfläche der Vakuumtrommel 470 fixiert. Ein zusätzlicher Schneidzylinder 440 zertrennt die als fortlaufendes Bahnmaterial bereitgestellte GDL oder Anode 10 in mehrere MEA-Komponentenabschnitte, hier Anodenabschnitte. Anschließend ordnet die zusätzliche Vakuumtrommel 470 jeweils einen MEA-Komponentenabschnitt oder Anodenabschnitt auf jedem der durch das zusätzliche Vakuumtransportband 130 geförderten Trägerrahmen oder MEA-Komponentenabschnitte an. Die Funktionsweise der dritten Vakuumtrommel 470 entspricht zumindest im Wesentlichen der Funktionsweise der ersten Vakuumtrommel.

Ferner zeigen die Figuren 9 und 10 die Rotationsstanze 810. Die Rotationsstanze 810 ist dazu eingerichtet, Membran-Elektroden-Anordnungen 1 aus der Trägerbahn mit den darauf angeordneten MEA-Komponentenabschnitten und GDL zu fertigen oder herauszustanzen. Durch einen Querschnitt und einen hierzu quer verlaufenden Längsschnitt werden die Membran-Elektroden-Anordnungen 1 hierbei aus der Trägerbahn ausgestanzt. Ein verbleibendes Stanzgitter/Ausschussgitter kann anschließend von den getrennten/vereinzelten Membran-Elektroden-Anordnungen 1 abgezogen oder wegbefördert werden.

Die vorangehend beschriebenen Varianten dienen lediglich dem besseren Verständnis der Struktur, der Funktionsweise und der Eigenschaften der hier offenbarten Gegenstände; sie schränken die Offenbarung nicht etwa auf die Ausführungsbeispiele ein. Die Figuren sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei können jede Funktionsweise, jedes Prinzip, jede technische Ausgestaltung und jedes Merkmal, welches/welche in den Figuren oder im Text offenbart ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Figuren umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Ein Verfahren zur Herstellung einer Membran-Elektroden-Anordnung, MEA, umfasst zumindest die Schritte:
- Bereitstellen zumindest einer Trägerbahn;
- Fördern der Trägerbahn entlang eines Förderwegs;
- Fördern einer luftdurchlässigen Stützbahn mit zumindest einer Vakuumtrommel, wobei zumindest ein MEA-Komponentenabschnitt auf der geförderten luftdurchlässigen Stützbahn angeordnet ist;
- Anordnen des MEA-Komponentenabschnitts auf der Trägerbahn, wobei der MEA-Komponentenabschnitt mit einer der luftdurchlässigen Stützbahn abgewandten Oberfläche auf der Trägerbahn angeordnet wird;
- Ablösen der luftdurchlässigen Stützbahn von dem auf der Trägerbahn angeordneten MEA-Komponentenabschnitt.

2. Verfahren nach dem Anspruch 1, weiter umfassend zumindest einen der Schritte:
- Bereitstellen der luftdurchlässigen Stützbahn;
- Anordnen des MEA-Komponentenabschnitts oder einer MEA-Komponente auf der luftdurchlässigen Stützbahn, wobei der MEA-Komponentenabschnitt oder die MEA-Komponente, insbesondere mittels eines Unterdrucks, auf der Stützbahn zumindest temporär fixiert wird.

3. Verfahren nach dem vorangegangenen Anspruch, wobei
das Ablösen der luftdurchlässigen Stützbahn von dem auf der Trägerbahn angeordneten MEA-Komponentenabschnitt das Aufheben des Unterdrucks umfasst.

4. Verfahren nach einem der vorangegangenen Ansprüche, wobei
das Anordnen des MEA-Komponentenabschnitts auf der Trägerbahn ein stoffschlüssiges thermisches Fügeverfahren, insbesondere ein Laminationsverfahren, oder ein Kaltlaminationsverfahren umfasst, welches den zumindest einen MEA-Komponentenabschnitt auf der Trägerbahn fixiert.

5. Verfahren nach einem der vorangegangen Ansprüche, wobei
die Stützbahn als ein fortlaufendes Bahnmaterial, insbesondere von einer Stützbahnrolle, bereitgestellt wird, und/oder
wobei die Stützbahn mehrere Ausnehmungen aufweist.

6. Verfahren nach einem der vorangegangenen Ansprüche, wobei
die Trägerbahn einen oder mehrere Trägerrahmen umfasst, und/oder
die Trägerbahn als ein fortlaufendes Bahnmaterial, insbesondere von einer Trägerbahnrolle, bereitgestellt wird.

7. Verfahren nach einem der vorangegangenen Ansprüche, wobei
die MEA-Komponente eine Gasdiffusionsschicht, GDL, umfasst, insbesondere eine Anode oder eine Katode in Form einer GDL, und/oder
die MEA-Komponente eine, insbesondere katalysatorbeschichtete, Membran, CCM, umfasst, und/oder
die MEA-Komponente als ein fortlaufendes Bahnmaterial, insbesondere von einer GDL- oder CCM-Rolle, bereitgestellt wird.

8. Verfahren nach einem der vorangegangenen Ansprüche, weiter umfassend zumindest einen der Schritte:
- Herstellen eines oder mehrerer MEA-Komponentenabschnitte durch Zerschneiden der MEA-Komponente mit einer Schneidvorrichtung, insbesondere mit einem Schneidzylinder; und/oder
- Fördern der MEA-Komponentenabschnitte gemeinsam mit der Trägerbahn mit einer Fördervorrichtung, insbesondere mit einem Vakuumtransportband, in entlang des Förderwegs.

9. Verfahren nach dem vorangegangenen Anspruch, wobei
das Zerschneiden der MEA-Komponente stattfindet, während die MEA-Komponente auf der luftdurchlässigen Stützbahn angeordnet ist, wobei
die luftdurchlässige Stützbahn durch das Zerschneiden der MEA-Komponente nicht zertrennt wird.

10. Eine Vorrichtung zur Herstellung einer Membran-Elektroden-Anordnung umfasst:
- eine Trägerbahnbereitstellungsvorrichtung, die dazu eingerichtet ist, zumindest eine Trägerbahn für eine Membran-Elektroden-Anordnung bereitzustellen;
- eine Fördervorrichtung, die dazu eingerichtet ist, die zumindest eine Trägerbahn kontinuierlich oder taktweise entlang eines Förderwegs zu fördern;
- eine Vakuumtrommel, die dazu eingerichtet ist, eine luftdurchlässige Stützbahn zu fördern, wobei zumindest ein MEA-Komponentenabschnitt auf der geförderten luftdurchlässigen Stützbahn angeordnet ist;
- eine Anordnungsvorrichtung, die durch die Vakuumtrommel ausgebildet oder von der Vakuumtrommel getrennte ist und die dazu eingerichtet ist, den MEA-Komponentenabschnitt mit einer der luftdurchlässigen Stützbahn abgewandten Oberfläche auf der Trägerbahn anzuordnen, wobei die Vorrichtung zur Herstellung einer Membran-Elektroden-Anordnung ferner dazu eingerichtet ist, die luftdurchlässige Stützbahn von dem auf der Trägerbahn angeordneten MEA-Komponentenabschnitt abzulösen.
